(19) Europäisches Patentamt
European Patent Office
Office européen des brevets

(11) EP 1 118 152 B1

(12) **EUROPÄISCHE PATENTSCHRIFT**

(45) Veröffentlichungstag und Bekanntmachung des Hinweises auf die Patenterteilung:
**08.12.2004 Patentblatt 2004/50**

(21) Anmeldenummer: **99938328.4**

(22) Anmeldetag: **23.07.1999**

(51) Int Cl.⁷: **H02P 6/14**

(86) Internationale Anmeldenummer:
**PCT/EP1999/005282**

(87) Internationale Veröffentlichungsnummer:
**WO 2000/021189 (13.04.2000 Gazette 2000/15)**

(54) **ELEKTRONISCH KOMMUTIERTER MOTOR**
ELECTRONICALLY COMMUTATED MOTOR
MOTEUR A COMMUTATION ELECTRONIQUE

(84) Benannte Vertragsstaaten:
**AT BE CH CY DE DK ES FI FR GB GR IE IT LI LU MC NL PT SE**

(30) Priorität: **05.10.1998 DE 19845626**

(43) Veröffentlichungstag der Anmeldung:
**25.07.2001 Patentblatt 2001/30**

(73) Patentinhaber: **ebm-papst St. Georgen GmbH & Co. KG**
**78112 St. Georgen (DE)**

(72) Erfinder:
- **DUFNER, Thomas**
**D-78136 Schonach (DE)**
- **HORNBERGER, Jörg**
**D-72280 Dornstetten (DE)**
- **JESKE, Frank**
**D-78112 St. Georgen (DE)**
- **RAPPENECKER, Hermann**
**D-78147 Vöhrenbach (DE)**

(56) Entgegenhaltungen:

| | |
|---|---|
| **DE-A- 19 700 479** | **GB-A- 2 305 314** |
| **US-A- 4 743 815** | **US-A- 5 285 135** |
| **US-A- 5 334 917** | **US-A- 5 717 297** |

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 118 152 B1

## Beschreibung

Die Erfindung betrifft einen elektronisch kommutierten Motor mit einem "Vorzündwinkei". Hierunter versteht man, daß die Kommutierung auf einen früheren Zeitpunkt verschoben wird, meist abhängig von der Drehzahl. Selbstverständlich wird bei einem Elektromotor nichts "gezündet", aber wegen seiner Anschaulichkeit verwendet man in der Praxis gerne diesen (aus der Automobiltechnik entlehnten) Begriff und spricht deshalb von einer "Zündwinkelverschiebung" bzw. einer "Frühzündung". Dieser Begriff wird deshalb nachfolgend verwendet, auch wenn er wissenschaftlich nicht völlig korrekt ist. Die Erfindung betrifft ferner ein Verfahren zur drehzahlabhängigen Kommutierung eines elektronisch kommutierten Motors.

## Zum Stand der Technik

Ein elektronisch kommutierter Motor mit Frühzündung ist aus der DE-A,197 00 479 bekannt. Hierbei ist die Genauigkeit der Kommutierung für manche Fälle nicht ausreichend groß, und das Programm muß nach einem festgelegten Zeitschema ablaufen, was aufwendig ist und die Rechenleistung eines Prozessors in manchen Fällen nur unzureichend ausnutzt. Auch können die Kommutierungsvorgänge zeitlich etwas schwanken, was die Geräusche eines solchen Motors erhöht.

Ferner kennt man aus den US-A-4743815 und 52855135 elektronisch kommutierte Motoren mit einer sogenannten Phasenanschnittssteuerung. Aus der US-A-5334917 ist ein elektronisch kommutierter Motor mit einer Kommutierungssteuerungseinheit zur Beeinflussung des Kommutierungszeitpunkts bekannt, welche durch einen Mikroprozessor überwacht wird.

Es ist deshalb eine Aufgabe der Erfindung, einen neuen elektronisch kommutierten Motor, und ein neues Verfahren zur drehzahlabhängigen Kommutierung eines solchen Motors, bereit zu stellen.

Nach einem ersten Aspekt der Erfindung wird diese Aufgabe gelöst durch einen elektronisch kommutierten Motor gemäß dem Patentanspruch 1. Ein solcher Motor arbeitet besonders bei höheren Drehzahlen mit einem besseren Wirkungsgrad, weil die Kommutierung mit zunehmender Drehzahl immer mehr nach früh verschoben werden kann. Durch die Verwendung einer Motorsteuerungs-Interruptroutine ergibt sich eine zeitlich präzise Steuerung des Kommutierungsvorgangs und damit ein ruhiger Lauf des Motors.

Eine andere Lösung der gestellten Aufgabe ergibt sich durch ein erfindungsgemäßes Verfahren gemäß dem Patentanspruch 15. Dadurch, daß anschließend an den Ablauf der ersten Zeit noch eine zweite Zeit gemessen wird, erhält man in sehr einfacher Weise durch Addition dieser beiden Zeiten, und ggf. eines Korrekturfaktors, eine zur Drehzahl des Motors im wesentlichen umgekehrt proportionale Zeitgröße, welche bei einem nachfolgenden Kommutierungsvorgang als aktualisierte Zeitgröße zur Berechnung eines neuen Zahlenwerts für die erste Zeit dienen kann.

Dabei wird gemäß Patentanspruch 22 diese Zeitgröße bevorzugt für einen Kommutierungsvorgang verwendet, der eine Rotorumdrehung später als die Messung der ersten und der zweiten Zeit liegt, weil sich dann ein besonders ruhiger Lauf des Motors ergibt. Wenn z.B. die Zeitgröße im Drehwinkelbereich 0° bis 180° el. gemessen wird, dient sie bevorzugt eine Umdrehung später als Basis für die Steuerung einer Kommutierung, die dort etwa im gleichen Winkelbereich 0° bis 180° el. stattfindet.

Auch wird in besonders bevorzugter Weise gemäß Anspruch 23 mindestens ein nicht zeitkritischer Verfahrensschritt als Unterroutine ausgebildet, welche im Programmablauf dann aufgerufen wird, wenn hierfür Prozessorzeit verfügbar ist. Dies ermöglicht es, im Gegensatz zu einem Programm mit festem Zeitschema, die Ressourcen eines Prozessors optimal zu nutzen, da bei dieser Verfahrensweise die Unterroutine dann abgearbeitet werden kann, wenn der Prozessor sonst gerade nichts zu tun hat.

Weitere Einzelheiten und vorteilhafte Weiterbildungen der Erfindung ergeben sich aus den im folgenden beschriebenen und in den Zeichnungen dargestellten, in keiner Weise als Einschränkung der Erfindung zu verstehenden Ausführungsbeispielen, sowie aus den übrigen Unteransprüchen. Es zeigt:

| | |
|---|---|
| Fig. 1 | eine beispielhafte Übersichtsdarstellung einer Ausführungsform der Erfindung, |
| Fig. 2 | die Pinbelegung des µC COP842CJ, |
| Fig. 3 | ein Schaltbild, welches die Bauteile für die Verarbeitung des Hallsignals zeigt, |
| Fig. 4 | eine Darstellung des Hallsignals und einer Kommutierung ohne Zündwinkelverschiebung, |
| Fig. 5 | eine schematische Darstellung zur Erläuterung der Berechnung eines (verfrühten) Kommutierungszeitpunkts $T_N$ aus Werten, die aus einem Signal HALL abgeleitet werden, |

| | |
|---|---|
| Fig. 6A und Fig. 6B | eine Darstellung der Berechnung der Hall-Länge, wenn kein Timer-Interrupt vorliegt, |
| Fig. 7A und 7B | eine Darstellung der Berechnung der Hall-Länge bei Vorliegen eines Timer-Interrupts, |
| Fig. 8A und 8B | ein Flußdiagramm einer Hall-Interruptroutine mit Zündwinkelverschiebung, |
| Fig. 9 | ein Flußdiagramm einer Zündwinkelberechnungsroutine, |
| Fig. 10 | ein Flußdiagramm einer Timer-Interruptroutine mit Zündwinkelberechnung |
| Fig. 11 | eine Darstellung des Hallsignals beim Hochlauf eines Motors, |
| Fig. 12A und 12B | eine Darstellung des Hallsignals und der zugehörigen Variablen der Antriebsfunktion, |
| Fig. 13 | ein Schaltbild mit Teilen, die für die Regelung und den Antrieb des elektronisch kommutierten Motors wichtig sind, |
| Fig. 14 | ein Schaltbild mit für die Ansteuerung eines EEPROMs und die Datenverbindung über einen Bus 30 wichtigen Teilen, |
| Fig. 15 | eine Darstellung einer bevorzugten Ausführungsform eines Funktionsmanagers, |
| Fig. 16 | ein in dem Funktionsmanager verwendetes Funktionsregister, |
| Fig. 17 | eine schematische Darstellung des Permanentmagneten eines vierpoligen Außenrotors, |
| Fig. 18A und 18B | Schaubilder zur Erläuterung der Wirkung von Magnetisierungsfehlern des Außenrotors der Fig. 17, |
| Fig. 19 | ein Flußdiagramm zur Zündwinkelberechnung, analog Fig. 9, aber in einer bevorzugten, modifizierten Form, |
| Fig. 20 | ein Flußdiagramm einer Hall-Interruptroutine für eine Kommutierung, wie sie in Fig. 4 dargestellt ist, |
| Fig. 21 | eine schematische Darstellung des Ablaufs der Kommutierung für den Fall, daß die Kommutierungszeitpunkte elektronisch nach früh verschoben werden, |
| Fig. 22 | den zeitlichen Verlauf des Signals HALL und des Stromes i_M in einer Motorwicklung ohne eine Verschiebung des Kommutierungszeitpunkts in Richtung früh, und |
| Fig. 23 | den zeitlichen Verlauf des Signals HALL und des Stromes i_M in einer Motorwicklung bei einer Verschiebung des Kommutierungszeitpunkts in Richtung früh. |

**Übersicht elektronisch kommutierter Motor (ECM)**

**Fig. 1** zeigt eine Übersicht über ein bevorzugtes Ausführungsbeispiel eines erfindungsgemäßen elektronisch kommutierten Motors (ECM). Dieser wird gesteuert mittels eines Mikrocontrollers (μC) 11, oder alternativ eines Mikroprozessors. Die Anschlüsse des beim Ausführungsbeispiel verwendeten μC 11 (COP842CJ) sind in Fig. 2 beispielhaft dargestellt.

Das in dem μC 11 ablaufende Programm ist mit Hilfe eines Funktionsmanagers strukturiert, welcher nachfolgend anhand von Fig. 15 und 16 beschrieben wird.

Der μC 11 hat über die Funktion "CTL EEPROM" 24 Zugriff auf einen nichtflüchtigen Speicher, hier ein EEPROM 26, von dem er Betriebsparameter in ein RAM 25 laden kann. Auch kann er Betriebsparameter im RAM 25 und im EEPROM 26 speichern. Der μC 11 kann über eine Kommunikationsfunktion COMM 28 und ein Businterface 30 Daten empfangen und senden. Die empfangenen Daten kann er zur Motorsteuerung verwenden oder im RAM 25 oder EEPROM 26 speichern. Das EEPROM 26 und das Businterface 30 sind bei Fig. 14 beschrieben.

Als einfaches Beispiel ist in Fig. 1 ein elektronisch kommutierter Motor M mit einer einzigen Phase 38 dargestellt. Ein solcher Motor ist z.B. in der DE 2 346 380 C dargestellt. Die Bestromung dieser Phase 38 geschieht durch eine Transistorendstufe 36. Die Ausgänge OUT1 und OUT2 des µC 11 steuern die als H-Brücke 37 geschalteten npn-Transistoren 141, 142, 143 und 144. Je nachdem, ob OUT1 auf HIGH und OUT2 auf LOW gesetzt sind, oder umgekehrt, verläuft der Strom durch die Statorwicklung 38 in die eine oder die andere Richtung. Selbstverständlich eignet sich die Erfindung in gleicher Weise für jede Art von elektronisch kommutiertem Motor, z.B. für dreiphasige Motoren und andere. Es handelt sich also nur um ein Ausführungsbeispiel.

Die Kommutierung erfolgt elektronisch. Hierzu wird die Stellung des permanentmagnetischen Rotors 39 über einen Hallsensor 40 erfaßt, über eine elektronische Hall-Schaltung 41, welche in Fig. 3 näher beschrieben wird, zu einem Signal HALL aufbereitet und an eine Antriebsfunktion AF 42 weitergeleitet, welche eine Hall-Interruptroutine HIR (Fig. 8), eine Timer-tnterruptroutine TIR (Fig. 10), eine Zündwinkelberechnungsroutine ZWR (Fig. 9), und einen Timer CNT_HL aufweist. Der Timer CNT_HL ist beim Ausführungsbeispiel Bestandteil des verwendeten µC 11, könnte aber auch ein separates Bauteil sein. Er dient dazu, Zeiten mit hoher Präzision zu messen und ist durch Befehle des µC 11 steuerbar.

Die Antriebsfunktion 42 sorgt für die richtige Kommutierung der Transistorendstufe 36 und den sicheren Betrieb, z.B. bei Überlastung der Transistorendstufe 36. Eine Kommutierung ohne Zündwinkelverschiebung wird bei Fig. 4 beschrieben. Die Kommutierung mit Zündwinkelverschiebung wird bei den Fig. 6 bis 12B beschrieben und ist in Fig. 21 dargestellt.

Ein Drehzahlregler RGL 43 regelt beim Ausführungsbeispiel die Motordrehzahl. (Selbstverständlich kann der Motor M auch ohne Drehzahlregler 43 betrieben werden.) Die Drehzahlregelung kann z.B. mittels eines Pulsweitenmodulation-Generators (PWM-Generators) 34 oder über eine Blocksteuerung geschehen, die bei 60 mit gestrichelten Linien schematisch angedeutet ist. Zur Blocksteuerung wird beispielhaft auf DE 444 1 372.6 (intern: D183i) verwiesen, die ein Beispiel einer solchen Blocksteuerung zeigt.

Der PWM-Generator 34 weist einen Dreiecksgenerator 35, eine Regelspannungserzeugung 45 und einen Komparator 120 auf und ist bei Fig. 13 näher erläutert. Die Erfindung kann selbstverständlich auch bei einem ECM ohne Drehzahlregelung verwendet werden.

Eine Strombegrenzung "$I < I_{max}$" 44 vermindert die Bestromung der Endstufe 36, falls der Strom in der einzigen Phase 38 zu hoch wird, z.B. beim Start des Motors. Die Strombegrenzung 44 wird bei Fig. 13 näher beschrieben.

Am Ende der Beschreibung sind für die in den einzelnen Figuren des Ausführungsbeispiels verwendeten elektronischen Bauteile bevorzugte Werte angegeben. Der Leser wird hierauf verwiesen.

**Fig. 2** zeigt die Pinbelegung des beim Ausführungsbeispiel verwendeten Mikrokontrollers (µC) 11 vom Typ COP842CJ der Firma National Semiconductors. Die Beschriftung innerhalb des µC 11 entspricht der Beschriftung des Herstellers, die äußere Beschriftung der jeweiligen Leitungen zeigt die hauptsächlich in der Anmeldung verwendeten Bezeichnungen. Zur Kennzeichnung der Lage ist links oben ein schwarzer Viertelkreis eingezeichnet, der sich in den folgenden Figuren wiederfindet.

**Fig. 3** zeigt ein detailliertes Schaltbild der Bauteile für die Hall-Schaltung 41, welche das Signal des Hall-Sensors 40 aufbereitet, die Beschaltung der Takteingänge CK0 und CK1 und die Beschaltung des Reseteingangs RES. Die übrigen Bauteile sind in Fig. 3 nicht dargestellt.

Ein Schwingquarz 97, der an die Anschlüsse CK0 und CK1 (vgl. Fig. 3) des µC 11 angeschlossen ist, gibt dessen Taktfrequenz vor, z.B. 10 MHz. Der Reseteingang Res (Fig. 3) ist über einen Kondensator 99 mit Masse 100 und über einen Widerstand 101 mit +Vcc verbunden. Diese beiden Bauelemente erzeugen in der üblichen Weise beim Einschalten einen Power-Up-Reset.

Der Hallgenerator 40 ist zur Stromversorgung über einen Widerstand 106 mit + Vcc, und mit Masse 100, verbunden. Sein Ausgangssignal $u_H$ wird den beiden Eingängen eines Komparators 108 zugeführt, dessen Vcc-Eingang ein Siebkondensator 110 zugeordnet ist. Der Ausgang des Komparators 108 ist über einen Rückführwiderstand 112 mit dem positiven Eingang des Komparators 108 und über einen sogenannten Pullup-Widerstand 114 mit +Vcc verbunden. Weiterhin ist der Ausgang des Komparators 108 direkt mit dem Port Hall (Fig. 3) des µC 11 verbunden, so daß man an diesem ein vom Rotormagneten 39 (Fig. 2) gesteuertes, rechteckförmiges Signal HALL erhält.

### Das Signal des Hall-Sensors 40, und die Kommutierung

**Fig. 4** zeigt ein Diagramm mit dem Signal HALL (Fig. 3) und der zugehörigen Kommutierung für den Fall, daß keine "Zündwinkelverschiebung" verwendet wird, d.h. daß die Kommutierung direkt durch das Signal HALL gesteuert wird.

Das Signal HALL hat - in seiner idealisierten Form - während einer Rotordrehung von 180° el. den Wert HALL = 0, und während der anschließenden Drehung von 180° el. den Wert HALL = 1. Jede Änderung von HALL = 1 zu HALL = 0, oder umgekehrt, bewirkt einen Interruptvorgang im µC 11, welcher in Fig. 4 in der Reihe HALL-INT mit einem Y bezeichnet ist.

Die Zeit zwischen zwei Hallwechseln, z.B. zwischen den Zeitpunkten t_O und t_E, wird nachfolgend Hall-Länge HL oder auch Hallzeit t_H genannt und ist in Fig. 4 als Ist-Hall-Länge HL eingezeichnet. Die Hall-Länge ist ein Maß für die Drehzahl des Motors. Je kleiner sie ist, desto größer ist die Drehzahl des Rotors 39 (Fig. 1). (Ein Istwert ist der aktuelle Wert, der am Motor gemessen wird.)

Die Bestromung der Statorwicklungen wird bei diesem Beispiel durch die Ausgangssignale OUT1 und OUT2 des µC 11 (Fig. 1 und 2) gesteuert, welche in Fig. 4 beispielhaft für den Betrieb bei niederen Drehzahlen angegeben sind und in Fig. 21 beschrieben werden.

Ist OUT1 auf 1 (HIGH) und OUT2 auf 0 (LOW), so fließt der Strom (Fig. 1) von der Plusspannung $U_N$ über den Transistor 144, die Statorwicklung 38, den Transistor 141 und den Meßwiderstand 140 nach Masse.

Ist dagegen OUT1 auf 0 und OUT2 auf 1, so fließt der Strom (Fig. 1) von der Plusspannung $U_N$ über den Transistor 142, in umgekehrter Richtung durch die Statorwicklung 38, über den Transistor 143 und den Meßwiderstand 140 nach Masse. Die Statorwicklung 38 wird dann umgekehrt bestromt.

Wenn keine Zündwinkelverschiebung vorgenommen wird, werden dort, wo sich das Signal HALL ändert, also bei den Hall-Interrupts Y, beide Werte OUT1 und OUT2 durch den µC 11 kurzzeitig zu Null gemacht, z.B. während 50 µs, um alle vier Transistoren 141 bis 144 kurzzeitig zu sperren und einen Kurzschluß in der Brücke 37 zu vermeiden. Dies ist in Fig. 4 dargestellt.

Eine einfache Hall-Interruptroutine für die Kommutierung gemäß Fig. 4 wird nachfolgend bei Fig. 20 beschrieben.

**Zusammenhang zwischen Drehzahl und Hall-Länge**

Die Hall-Länge HL ist in Fig. 4 dargestellt. Ihr Zusammenhang mit der Drehzahl n wird im folgenden aufgezeigt. Dieser Zusammenhang ist eine Funktion der Polzahl P des Rotors 39.

Mißt man die Hall-Länge HL' in Sekunden, so gilt

$$HL' = T/P \qquad (1)$$

Hierbei bedeuten:

T = Dauer einer Rotorumdrehung in Sekunden
P = Polzahl des Rotors 39.

Mißt man die Drehzahl n in U/min, so gilt

$$HL' = 60/(n \times P) \qquad (2)$$

Hierbei bedeuten

n = Drehzahl in U/min
P = Polzahl des Rotors 39

Da die Hall-Länge HL beim Ausführungsbeispiel in µs vorliegt, HL' aber in Sekunden, wird HL' zu HL renormiert

$$HL = 1\,000\,000\ HL' \qquad (3)$$

Für P = 4, also einen vierpoligen Rotor, ergibt sich

$$HL = 15\,000\,000/n \qquad (4)$$

Umgekehrt ist bei P = 4

$$n = 15\,000\,000/HL \qquad (5)$$

Hierbei bedeuten:

n = Drehzahl in U/min
HL = Hall-Länge in µs

Der Drehzahl n = 2870 $min^{-1}$ entspricht z.B. bei einem vierpoligen Rotor eine Hall-Länge HL von HL = 15 000 000/ 2870 = 5226 µs.

Die prozessorinterne Hexadezimaldarstellung hierfür ist 0x146A. (Hexadezimalzahlen werden durch ein vorangestelltes 0x gekennzeichnet.)

**Die Zündwinkelverschiebung**

Beim Motor nach Fig. 1 ist der Rotorstellungssensor 40 in einer Pollücke des Stators angeordnet, also bei 0 ° el., und ein Wechsel des Signals HALL wird folglich erzeugt bei 0 ° el., 180 ° el., 360 ° el. etc., wie in Fig. 4 beispielhaft dargestellt. Für eine solche Anordnung des Hallgenerators wird beispielhaft verwiesen auf DE-A, 197 00 479.2 (intern: D201 i), Fig. 1, Teil 25.

Bei schnellaufenden Motoren ist es jedoch zur Optimierung der Leistung und des Wirkungsgrads notwendig, die Kommutierung des Stroms in der Statorwicklung 38 vor dem Wechsel des Hallsignals durchzuführen, also in Fig. 4 zeitlich vor t_0, ebenso zeitlich vor t_E. Man kann das als Vorzündung oder Frühzündung bezeichnen. Hierzu wäre es möglich, den Rotorstellungssensor 40 relativ zum Stator des Motors 39 zu verschieben. Da der Motor aber meist in beiden Richtungen laufen soll, und der Vorzündwinkel bei beiden Drehrichtungen mit zunehmender Drehzahl zunehmen soll, ist dies nicht praktikabel.

Die Zündwinketverschiebung wird deshalb elektronisch gesteuert. Hierzu wird der bereits beschriebene 16 Bit-Timer CNT_HL (Fig. 1) verwendet. Der Timer CNT_HL wird bei jedem Hall-Interrupt Y mit einem (zuvor berechneten) Anfangswert t_TI geladen und anschließend heruntergezählt, bis er den Wert 0 erreicht. Beim Erreichen der Null löst der Timer CNT_HL im µC 11 einen sogenannten Timer-Interrupt aus, und der Timer wird automatisch mit dem Inhalt t_AR eines sogenannten Autoreload-Registers AR (ebenfalls im µC 11) nachgeladen und erneut gestartet, vgl. S302 in Fig. 10.

Bei einem Hall-Interrupt Y wird der Timer CNT_HL nun so eingestellt, daß er zu dem Zeitpunkt die Null erreicht und dadurch einen Interrupt auslöst, zu dem die Kommutierung stattfinden soll. Dieser Timer-Interrupt wird in Fig. 5 mit $T_N$, $T_{N+1}$ etc. bezeichnet, und ein Hall-Interrupt mit $H_N$, $H_{N+1}$ etc.

Die Arbeitsweise des Timers ist durch den verwendeten µC vorgegeben, der diesen Timer enthält. Dabei ist ggf. die Möglichkeit gegeben, den Timer über ein Register des µC zu konfigurieren. Mögliche Konfigurationen betreffen z.B. das Auslösen eines Interrupts beim Erreichen der 0, oder automatisches Wiederaufladen des Timers bei Erreichen der 0.

Zusätzlich wird hier der Timer CNT_HL in sehr vorteilhafter Weise für die Messung der Hall-Länge HL (Fig. 4) verwendet, die in Fig. 5 mit $t_H_N$ bezeichnet ist.

**Fig. 5** zeigt die Berechnung des Timerstartwerts t_TI. Dargestellt sind das Signal HALL, das an dem Eingang Hall (Fig. 2) des µC 11 anliegt, die Hall-Interrupts $H_{N-1}$, $H_N$ etc., die Timer-Interrupts $T_{N-1}$, $T_N$ etc. und die Hall-Längen $t_H_{N-1}$, $t_H_N$ etc., welche beim Ausführungsbeispiel die Zeit angeben, die der vierpolige Rotor 39 für eine Viertels-Umdrehung benötigt, also für 180° el..

Die Begriffe Hall-Länge HL und Hallzeit t_H werden im folgenden synonym verwendet. Eine Hallzeit $t_H_{N+1}$ beginnt jeweils nach und exklusive einem Hall-Interrupt $H_N$ und endet mit und inklusive dem folgenden Hall-Interrupt $H_{N+1}$. Die Hallund Timer-Interrupts werden nach der Hallzeit, in der sie stattfinden, numeriert. Zur Hallzeit $t_H_N$ gehört also der Timer-Interrupt $T_N$ und - am Ende dieser Zeit - der Hall-Interrupt $H_N$.

Unter dem Signal HALL sind in Fig. 5 die Werte des Timers CNT_HL eingetragen. Zwischen den jeweiligen Werten zählt der Timer CNT_HL herunter, z.B. im Zeitraum 310 von t_TI auf 0, und im Zeitraum 312 von t_TI auf t_E.

Der Timerstartwert t_TI für die Hallzeit $t_H_{N+2}$ wird bei diesem Beispiel aus der Hall-Länge $t_H_N$ berechnet. Hierzu wird, wie bei 300 symbolisch angegeben, während der Hallzeit $t_H_{N+1}$ ein Wert t_TI berechnet nach der Beziehung

$$t_TI := t_H_N - t_ZW \qquad (6)$$

d.h. von der Hall-Länge $t_H_N$ wird eine (hier konstante) Zündwinkelzeit t_ZW abgezogen. Analog wird t_TI für die Hallzeit $t_H_{N+3}$ aus der Hall-Länge $t_H_{N+1}$ berechnet, wie bei 301 symbolisch angegeben, usw.

Auf diese Weise wird also zu den Zeitpunkten $T_N$, $T_{N+1}$, $T_{N+2}$ etc kommutiert. $T_N$ liegt etwa um die Zeit t_ZW früher als $H_N$, d.h. die Kommutierung wird nach früh verschoben. Analog liegt $T_{N+1}$ früher als $H_{N+1}$, etc. Die Zeitpunkte $T_N$, $T_{N+1}$ etc sind durch einen nach oben ragenden Pfeil angedeutet.

Nachfolgend wird anhand der Fig. 17 bis 19 beschrieben, wie bei einem vierpoligen Rotor 39 in sehr vorteilhafter Weise z.B. der Kommutierungszeitpunkt $T_{N+4}$ durch die zeitlich vorhergehende Hall-Länge $t_H_N$ bestimmt werden kann, was einen besonders ruhigen Lauf des Motors ergibt. Diese Variante ist in Fig. 5 mit 304 bezeichnet und durch die strichpunktierten Linien 306, 308 symbolisiert. Bei einem sechspoligen Rotor würde analog der Kommutierungszeitpunkt $T_{N+6}$ durch die Hall-Länge $t_H_N$ bestimmt werden.

**Fig. 6** und **Fig. 7** zeigen die beiden möglichen Fälle, die bei der Messung der Hall-Längen t_H mit dem Timer CNT_HL auftreten können.

Dargestellt sind das Signal HALL, das an dem Eingang Hall (Fig. 2) des µC 11 anliegt, die Hall-Interrupts $H_N$ und $H_{N+1}$, ein Timer-Interrupt $T_{N+1}$ (in Fig. 7), und an der Zeitachse stehen in Fig. 7A die Startwerte t_B und die Stoppwerte t_E des Timers CNT_HL, die bei der Berechnung der Hall-Länge $t_H_{N+1}$, die ja erst während der folgenden Hallzeit $t_H_{N+2}$ ausgeführt wird, zur Verfügung stehen. t_B entspricht dem (zuvor berechneten) Startwert t_TI des Timers CNT_HL beim Hall-Interrupt $H_N$ und t_E dem Stoppwert des Timers CNT_HL beim Hall-Interrupt $H_{N+1}$.

Es können nun zwei Fälle auftreten.

Der erste Fall (Fig. 6) ist, daß der Motor so stark beschleunigt, daß der Hall-Interrupt $H_{N+1}$ auftritt, bevor der Timer CNT_HL den Wert 0 erreicht. In diesem Fall wird in der durch den Hall-Interrupt $H_{N+1}$ ausgelösten Hall-Interruptroutine der Stoppwert des Timers CNT_HL in t_E gespeichert (S202 in Fig. 8A), der Motor wird kommutiert, der Timer CNT_HL und das Autoreload-Register AR werden erneut mit einem aus der Hall-Länge $t_H_{N-1}$ berechneten Wert (Fig. 5) geladen, und der Timer CNT_HL wird erneut gestartet (S238 in Fig. 8B). Bei Fig. 6 tritt also während der Hallzeit $t_H_{N+1}$ kein Timer-Interrupt $T_{N+1}$ auf.

Die Hall-Länge $t_H_{N+1}$ berechnet sich in diesem Fall nach der Beziehung

$$t_H_{N+1} := t_B - t_E + t_CORR \qquad (7)$$

t_CORR ist hierbei ein Korrekturwert, der in Fig. 9 bei S258 näher erläutert wird und in Fig. 6B dargestellt ist.

Der zweite Fall (Fig. 7A) ist, daß der Timer CNT_HL vor dem Auftreten des Hall-Interrupts $H_{N+1}$ die 0 erreicht. Beim Erreichen der Null wird ein Timer-Interrupt $T_{N+1}$ ausgelöst, der in Fig. 10 dargestellt ist. Der Timer CNT_HL wird beim Timer-Interrupt $T_{N+1}$ automatisch mit dem Wert t_AR aus dem Autoreload-Register AR (Fig. 1) nachgeladen und erneut gestartet, vgl. S302 in Fig. 10. t_B hat hier den gleichen Wert wie t_TI und entspricht damit auch t_AR.

Dies zeigt Fig. 7B. In der Zeitspanne ab einem Zeitpunkt kurz nach $H_N$ bis $T_{N+1}$ zählt der Timer CNT_HL von t_B auf 0 herunter und löst beim Wert 0 den Timer-Interrupt $T_{N+1}$ aus. Am Anfang dieses Interrupts wird der Timer CNT_HL erneut mit t_B geladen, vgl. Fig. 10, S302, und zählt dann während der Zeit bis $H_{N+1}$ erneut herunter, erreicht dabei aber nicht den Wert 0, sondern nur den Wert t_E. Beim Hall-Interrupt $H_{N+1}$ wird der Timer CNT_HL erneut mit einem (zuvor berechneten) Wert t_B' geladen, und die ganze Prozedur wiederholt sich.

In der durch das Auftreten des Timer-Interrupts $T_{N+1}$ aufgerufenen TimerInterruptroutine wird, sofern die Zündwinkelverschiebung eingeschaltet ist, die Kommutierung durchgeführt, vgl. Fig. 10, S318, S320, S322, und ein Flag KD (Kommutierung Durchgeführt) wird auf 1 gesetzt, vgl. Fig. 10, S324.

Bei dem darauffolgenden Hall-Interrupt $H_{N+1}$ wird der Timer CNT_HL erneut gestoppt und seine Endzeit t_E abgespeichert, vgl. Fig. 8A, S202. Die Hall-Länge $t_H_{N+1}$ (Fig. 7) wird aufgrund des gesetzten Flags KD (Fig. 9, S252) in den Schritten S254 und S258 von Fig. 9 folgendermaßen berechnet:

$$t_1 := t_B - t_E \qquad (8)$$

$$t_H_{N+1} := t_B + t_1 + t_CORR \qquad (9)$$

Hierbei ist t_1 die Zeit zwischen dem Timer-Interrupt $T_{N+1}$ und dem Hall-Interrupt $H_{N+1}$, wie in Fig. 7 dargestellt. Für die Berechnung der Hall-Länge $t_H_{N+1}$ muß zu dem Wert t_1 der Wert t_B addiert werden, da der Timer CNT_HL zwischen dem Hall-Interrupt $H_N$ und dem Timer-Interrupt $T_{N+1}$ diesen Wert auf Null heruntergezählt hat. Außerdem wird ggf. ein Korrekturwert t_CORR addiert, der in Fig. 7B dargestellt ist, z.B. 40 µs beträgt und nachfolgend bei Fig. 9, S258, näher erläutert wird. Nach dem Hall-Interrupt $H_{N+1}$ und einer Drehzahlberechnung (S274 in Fig. 9) muß das Flag KD wieder zurückgesetzt werden (KD := 0, vgl. S272 in Fig. 9).

**Zahlenbeispiel zu Fig. 7**

Bei $H_N$ wird der Timer CNT_HL z.B. auf den (zuvor im Schritt 303 der Fig. 5 berechneten) Wert t_TI = t_B = 9800 gesetzt. t_B hat also bei der Berechnung den Wert 9800 µs. Bei $T_{N+1}$ hat der Timer CNT_HL den Wert 0 erreicht, bewirkt einen Timer-Interrupt, und wird erneut mit 9800 geladen und gestartet (S302 in Fig. 10). Bei $H_{N+1}$ hat der Zähler CNT_HL den Wert t_E = 9640 erreicht. Der Wert t_CORR soll 40 µs betragen. Dann ist nach den Gleichungen (8) und (9)

$$t_1 := 9800 - 9640 = 160\ \mu s$$

$$t_H_{N+1} := 9800 + 160 + 40 = 10000\ \mu s$$

Die Hall-Länge $t_H_{N+1}$ ist in diesem Beispiel also 10 000 µs lang, entsprechend einer Drehzahl (Gleichung 5; vierpoliger Rotor) von

$$n_i = 15\,000\,000/t_H_{N+1} = 15\,000\,000/10\,000 = 1500\ U/min.$$

Anschließend wird kurz nach $H_{N+1}$ der Timer CNT_HL auf einen neuen Wert t_B' geladen, der dem (zuvor berechneten) Wert t_TI' entspricht, vgl. den Schritt 300 in Fig. 5.

**Fig. 8A und 8B** zeigen das Flußdiagramm einer beispielhaften Ausführungsform einer bevorzugten Hall-Interruptroutine, also einer rotorstellungsabhängigen Interruptroutine. Diese wird ausgelöst beim Erreichen von vorgegebenen Rotorstellungen und ist zuständig für die Bestimmung der Hall-Länge $t_H_N$ und auch für die Kommutierung, sofern letztere nicht in der Timer-Interruptroutine durchgeführt worden ist. Alle nachfolgend beschriebenen Register bzw. Variablen sind beim Ausführungsbeispiel 16 Bit groß.

In S202 wird der Timer CNT_HL gestoppt und die Stoppzeit des Timers CNT_HL in t_E gespeichert.

In den folgenden Schritten S204-S208 wird im µC 11 die Flanke für den nächsten Hall-Interrupt eingestellt. Hierzu wird in S204 überprüft, ob HALL = 1 ist. Ist dies der Fall, wird in S206 die Flanke, bei der der nächste Hall-Interrupt ausgelöst werden soll, auf eine fallende Flanke (HIGH -> LOW) gesetzt. Ansonsten wird in S208 die Flanke auf steigende Flanke (LOW -> HIGH) gesetzt.

In S210 wird nun anhand des Flags DE (Drehzahl Erreicht) zwischen zwei Fällen unterschieden:

- Ist DE = 1, so ist entweder kein Timer-Interrupt aufgetreten, oder ein Timer-Interrupt ist aufgetreten, und die Zündwinkelverschiebung war eingeschaltet. Beides sind, wie später weiter erläutert wird, Zeichen dafür, daß der Motor seine Drehzahl erreicht hat.

- Ist DE = 0, so war die Zündwinkelverschiebung ausgeschaltet (SZW = 0), und ein Timer-Interrupt ist aufgetreten. Dies ist, wie später erläutert wird, ein Zeichen dafür, daß die Mindestdrehzahl n_min, ab der die Zündwinkelverschiebung eingeschaltet wird, noch nicht erreicht ist.

Für den Fall DE = 0 wird die Kommutierung durchgeführt und der Timer CNT_HL auf einen festen Wert t_max (maximale Hall-Länge) gesetzt, der der Mindestdrehzahl n_min entspricht. Ist z.B. die Mindestdrehzahl 300 U/min, so beträgt nach Gleichung (4)

$$t_max = 15\,000\,000/300 = 50\,000\ \mu s$$

Hierzu werden in S212 OUT1 und OUT2 auf 0 gesetzt.

In S214 werden das Autoreload-Register AR und der Zähler CNT_HL auf t_max (z.B. 50000) gesetzt. Der Timer CNT_HL arbeitet in diesem Beispiel mit einer Auflösung von 1 µs. Das Setzen von CNT_HL auf eine Länge von 50000 µs entspricht einer Drehzahl von 300 U/min. Daraufhin wird der Timer CNT_HL gestartet.

In S216 wird das Flag DE (war 0) auf 1 gesetzt und in S218-S222 die Kommutierung durchgeführt. Ist in S218 HALL = 1, so wird in S220 OUT1 auf HIGH, ansonsten in S222 OUT2 auf HIGH gesetzt. Für die zwischen dem Ausschalten der Ports OUT1 und OUT2 in S212 und dem Einschalten von OUT1 bzw. OUT2 in S220 bzw. S222 durchgeführten Programmschritte S214 - S218 hat das Programm eine gewisse Zeit benötigt, so daß eine ausreichende Kommutierungslücke (Fig. 21: t_G) eingehalten wurde, z.B. 50 µs.

In S224 wird schließlich der Hall-Interrupt verlassen.

Falls in S210 DE = 1 war, wird in S230 die Berechnung der Hall-Länge t_H und des neuen Timerwerts t_TI für die Zündwinkelverschiebung angefordert. Das Hauptprogramm ist mit Hilfe eines Funktionsmanagers aufgebaut, der nachfolgend in Fig. 15 näher beschrieben ist. Der Funktionsmanager ermöglicht es, durch Setzen von Flags Routinen anzufordern und durch das Zurücksetzen der Flags die Anforderung zu löschen. Für die Anforderung der Berechnung wird in S230 ein Flag FCT_ZWV auf 1 gesetzt.

Eine mögliche Alternative zu S230 besteht darin, die Berechnung direkt in der Hall-Interruptroutine (Fig. 8) durchzuführen. Dies soll durch S232 angedeutet werden. Wird die Berechnung in S232 ausgeführt, so kann für die Berechnung der Timer-Interruptzeit t_TI welche der Hallzeit $t_H_N$ (z.B. $t_H_5$) zugeordnet ist, die Hallzeit $t_H_{N-1}$ (z.B. $t_H_4$) verwendet werden. Wird S230 verwendet, so wird die Hallzeit $t_H_{N-2}$ (z.B. $t_H_3$) verwendet, oder eine noch frühere Hallzeit, wie bei den Fig. 17 bis 19 beschrieben. Wird die Berechnung im Hallinterrupt durchgeführt (S232), so entfällt S230. Die nachfolgende Beschreibung bezieht sich auf eine Version ohne S232.

In S234 (Fig. 8B) wird geprüft, ob das Flag KD = 1 ist (KD = Kommutierung Durchgeführt). Falls KD = 1 ist, so ist in der zu dem Hall-Interrupt gehörenden Hallzeit ein Timer-Interrupt aufgetreten, wie in Fig. 7A für $H_{N+1}$ dargestellt, und die Zündwinkelverschiebung war eingeschaltet. In diesem Fall wurde die Kommutierung bereits im Timer-Interrupt ($T_{N+1}$ in Fig. 7A) durchgeführt, und es wird direkt zu S238 gesprungen.

Ist in S234 KD = 0, so ist in der zu dem Hall-Interrupt gehörigen Hallzeit kein Timer-Interrupt aufgetreten, d. h. man hat die Situation gemäß Fig. 6. Die Kommutierungslücke (t_G in Fig. 21) wird in S236 durch das Setzen beider Ports OUT1 und OUT2 auf Null gestartet, d.h. die Statorwicklung 38 (Fig. 1) erhält kurzzeitig keine Energie zugeführt. Der Fall, daß ein Timer-Interrupt aufgetreten ist, aber aufgrund inaktiver Zündwinkelverschiebung bei diesem Interrupt nicht kommutiert worden ist, wird in dem Zweig unter S210 für DE = 0 berücksichtigt (Fig. 8A).

In S238 werden das Autoreload-Register AR und der Timer CNT_HL mit dem in der nachfolgend beschriebenen Zündwinkelberechnung (Fig. 9 oder 19) berechneten Wert t_TI geladen, und der Timer CNT_HL wird gestartet.

In S240 wird die Zündwinkelverschiebung durch das Setzen des Flags SZW := 1 auf aktiv gesetzt, da die erforderliche Drehzahl erreicht war (DE = 1), z.B. bei diesem Beispiel die Drehzahl 300 U/min.

In S242 wird wieder anhand des Flags KD (Kommutierung Durchgeführt) überprüft, ob die Kommutierung bereits stattgefunden hat. Falls nicht (KD = 0), wird in S244 anhand des Signals HALL überprüft, ob entweder in S246 OUT1 auf HIGH oder in S248 OUT2 auf HIGH gesetzt wird. Die Kommutierungslücke (t_G in Fig. 21) wird hierbei durch die zwischen dem Ausschalten der Ports OUT1 und OUT2 (S236) und dem Einschalten liegenden Schritte S238 bis S244 erzeugt.

In S250 wird die Hall-Interruptroutine schließlich verlassen.

**Fig. 9** zeigt ein Flußdiagramm für eine beispielhafte Routine zur Zündwinkelberechnung, welche bei erreichter Mindestdrehzahl bei jeder Hall-Interruptroutine (Fig. 8) durch Setzen des Anforderungsbits FCT_ZWV (Fig. 15) angefordert wird, vgl. S230 in Fig. 8A. Die Zündwinkelberechnung wird durch den Funktionsmanager 190 (Fig. 15) aufgerufen, wenn keine Aufgaben höherer Priorität angefordert sind. Man kann deshalb nicht genau sagen, wann diese Berechnung stattfindet. Die Zeitpunkte $B_N$ (z.B. in Fig. 12A und 12B), an denen die Zündwinkelberechnung ausgeführt wird, sind also nicht genau festgelegt, sondern stellen Beispielzeitpunkte dar.

Es ist zu beachten, daß die Berechnung der Hall-Länge t_H immer für eine vorhergehende Hallzeit gilt. So wird z.B. während der Hallzeit $t_H_N$ die Hall-Länge $t_H_{N-1}$ berechnet.

In S252 wird anhand des Flags KD überprüft, ob in dem Timer-Interrupt (z.B. $T_{N+1}$ in Fig. 7) eine Kommutierung durchgeführt wurde, vgl. S234 in Fig. 10. Falls ja (KD = 1), so ergibt sich gemäß S254, wie in Fig. 7 gezeigt und dort beschrieben, die Hall-Länge t_H aus der Startzeit t_B und der Zeit t_1, welche die Differenz von t_B und t_E ist. Falls nein (KD = 0), ergibt sich gemäß S256 die Hall-Länge t_H aus der Differenz von t_B und t_E, vgl. Fig. 6.

In S258 wird zu der Hall-Länge t_H eine Korrekturzeit t_CORR addiert. Diese ergibt sich daraus, daß der Timer CNT_HL am Anfang der Hall-Interruptroutine (Fig. 8A und 8B) bei S202 angehalten, aber erst später in S232 erneut gestartet wird. Bis dahin hat die Hall-Interruptroutine eine gewisse Zeit benötigt, die nun als t_CORR (z.B. 40 μs) addiert wird, um in S258 die exakte Hall-Länge t_H zu erhalten.

In S260 wird die augenblickliche Hall-Länge t_H in dem Ist-Hallwert t_i abgespeichert, damit der momentane Ist-Hallwert allen anderen Programmteilen (z.B. der Regelung) als Maß für die augenblickliche Drehzahl zur Verfügung steht.

In S262 wird die aktuelle Startzeit des Timers CNT_HL in t_B gesichert, so daß sie für die Berechnung von t_TI während der nächsten Hallzeit verfügbar ist.

Es folgt eine Überprüfung der Drehzahl, da erst ab einer vorgegebenen Mindestdrehzahl n_min, z.B. 300 U/min, eine Zündwinkelverschiebung durchgeführt werden soll. Hierzu wird in S264 verglichen, ob t_H > t_SZW ist. t_SZW (z.B. 49664 μs, was 0xC200 entspricht) ist die maximale Hall-Länge, bis zu der eine Zündwinkelverschiebung durchgeführt werden soll. Ist t_H größer als t_SZW, so ist der Motor zu langsam, und in S266 wird mit SZW := 0 die Zündwinkelverschiebung ausgeschaltet.

In S268 wird der Kommutierungszeitpunkt t_TI, also der Zeitpunkt, zu dem ein Timer-Interrupt ausgelöst werden soll, berechnet. Hierzu wird in S268 ein Wert t_ZW, nämlich die Zeit, um die der Zeitpunkt der Kommutierung nach früh verschoben werden soll, subtrahiert, z.B. 200 μs. Das kann ein konstanter Wert sein, oder auch ein Wert, der von einem Motorparameter abhängig ist. Über den Bus 30 (Fig. 14) kann dieser Wert t_ZW von außen verändert werden. Ist t_ZW = 0, so ist die Zündwinkelverschiebung abgeschaltet.

Die Zündwinkelberechnungsroutine ist nun abgearbeitet worden. Das Anforderungsbit FCT_ZWV (Fig. 15) wird in S270 auf 0 gesetzt, in S272 wird das Flag KD wieder auf 0 gesetzt, damit es für die folgende Hallzeit genutzt werden kann, und in S274 wird das Anforderungsbit FCT_RGL (Fig. 15) der Regelung des Motors gesetzt, so daß diese angefordert wird.

Die Hauptaufgaben der Zündwinkelberechnungsroutine gemäß Fig. 9 waren also das Bestimmen der Zeitdauer der vorhergehenden Hall-Länge (S258), das Berechnen des Kommutierungszeitpunkts für die folgende Hallzeit (S268), und das Anfordern der Regelung (S274).

**Fig. 10** zeigt ein Flußdiagramm für eine beispielhafte Timer-Interruptroutine, welche zur Motorsteuerung dient und ausgelöst wird, wenn der in dem vorhergehenden Hall-Interrupt initialisierte und gestartete Timer CNT_HL auf 0 zurückgezählt hat, bevor der nächste Hall-Interrupt ausgelöst wird, vgl. Fig. 7A und 7B.

Beim Erreichen des Wertes 0 wird der Timer CNT_HL in S302 mit dem Wert t_AR des Autoreload-Registers AR geladen und erneut gestartet, da er gleichzeitig für die Berechnung der Hall-Länge t_H dient. Dieser Schritt wird von dem µC 11 bei Erreichen der 0 für diesen Zähler automatisch ausgeführt und ist nur zur Verdeutlichung in das Flußdiagramm aufgenommen worden.

In S304 wird anhand des Flags SZW überprüft, ob die Zündwinkelverschiebung aktiv ist. Ist sie nicht aktiv, so läuft der Motor langsamer als die minimale Drehzahl. Dies wird ersichtlich, da bei nicht aktiver Zündwinkelverschiebung, wenn der Timer-Interrupt stattgefunden hat, in der Hall-Interruptroutine in S214 das Autoreloadregister AR und der Timer CNT_HL auf die der minimalen Drehzahl n_min entsprechende maximale Hall-Länge t_max gesetzt werden. Findet trotzdem der Timer-Interrupt ($T_{N+1}$ in Fig. 7) vor dem Hall-Interrupt ($H_{N+1}$ in Fig. 7) statt, so ist die minimale Drehzahl n_min nicht erreicht, und das Flag DE (Drehzahl Erreicht) wird auf 0 gesetzt und in S308 die Timer-Interruptroutine verlassen.

Bei aktiver Zündwinkelverschiebung (SZW =1) wird von S304 nach S310 gesprungen, wo die beiden Ports OUT1 und OUT2 zum Beginn der Kommutierungslücke auf 0 gesetzt werden.

Die Schritte S312 bis S316 bilden eine Programmschleife, welche eine ausreichend lange Kommutierungslücke (t_G in Fig. 21) bewirkt. Hierzu wird in S312 einem Zähler DEL_CNT ein Verzögerungswert t_DEL zugeordnet, z.B. die Zahl 5. In S314 wird der Zähler DEL_CNT um 1 dekrementiert und in S316 wird überprüft, ob DEL_CNT schon den Wert 0 erreicht hat, die Verzögerungsschleife also vollständig abgearbeitet ist.

Falls nicht, wird wieder nach S314 zurückgesprungen und die Schleife setzt fort. Wenn ein Durchlauf der Schleife z.B. 10 µs benötigt, so erhält man mit den oben genannten Werten eine Verzögerung von 50 µs, während der die Ports OUT1 und OUT2 beide das Ausgangssignal 0 haben, was die Kommutierungslücke t_G bewirkt.

Anschließend findet in gewohnter Weise die Kommutierung statt, wie bereits in Fig. 8A bei S218 bis S224 beschrieben. Ist in S318 der Hallwert HALL = 1, so wird in S320 OUT1 auf HIGH gesetzt, ansonsten wird in S322 OUT2 auf HIGH gesetzt. Die Kommutierung ist also - mit Zündwinkelverschiebung - im Timer-Interrupt und vor dem Hall-Interrupt durchgeführt worden, also in Fig. 7 zum Zeitpunkt $T_{N+1}$ vor dem Hall-Interrupt $H_{N+1}$.

In S324 wird das Flag KD (Kommutierung Durchgeführt) auf 1 gesetzt, damit die HallInterruptroutine und die Zündwinkelberechnungsroutine dies erkennen können, und daraufhin wird die Hall-Interruptroutine in S326 verlassen.

**Fig. 11** zeigt beispielhaft eine Darstellung des Signals HALL, der Zeitpunkte der Hall-Interrupts $H_N$ und der Timer-Interrupts $T_N$ beim Hochlauf eines erfindungsgemäßen Motors. Die Hallzeiten $t_H_N$, welche jeweils zwischen den Hall-Interrupts $H_{N-1}$ und $H_N$ stehen, werden immer kürzer, da der Motor beschleunigt. Es tritt nicht während jeder Hallzeit ein Timer-Interrupt auf. In diesem Beispiel wird in t_H2 und den folgenden Hallzeiten eine Zündwinkelberechnung ausgeführt, aufgrund der Beschleunigung des Motors treten in diesem Beispiel jedoch nur die Timer-Interrupts $T_1$, $T_{10}$ und $T_{11}$ auf, da die Drehzahl erst ab $t_H_8$ einigermaßen konstant wird.

In Fig. 12A und 12B ist der Verlauf der Fig. 11 in vergrößertem Maßstab dargestellt und mit zusätzlichen Erläuterungen versehen.

**Fig. 12A und 12B** zeigen einen zeitlichen Beispielverlauf eines Starts eines erfindungsgemäßen Motors. Dieser soll das Zusammenspiel des Hall-Interrupts, der Zündwinkelberechnung und des Timer-Interrupts verdeutlichen.

In Fig. 12A und 12B werden folgende Variablen verwendet:

| | |
|---|---|
| DE: | Flag "Drehzahl Erreicht" |
| KD: | Flag "Kommutierung Durchgeführt" |
| SZW: | Flag "Start ZündwinkelVerschiebung" |
| t_AR: | Wert im Autoreloadregister AR (Fig. 1) |
| CNT_HL: | Timer für Timer-Interrupt und Berechnung der Hall-Länge |
| t_E: | Stoppzeit (Zeit des Endes) |
| t_H: | Hall-Länge (Hallzeit) |
| t_B: | Startzeit (Zeit des Beginns) |
| OUT1: | Port des µC 11 zur Bestromung des Motors |

OUT2: Port des µC 11 zur Bestromung des Motors

Das Signal HALL am Eingang Hall des µC 11 ist eingetragen. Die Hall-Längen t_H stehen jeweils zwischen den sie umschließenden Hall-Interrupts, z.B. $t_H_2$ = 40 ms zwischen $H_1$ und $H_2$, $t_H_3$ = 35 ms zwischen $H_2$ und $H_3$, etc. Hall-Interrupts sind jeweils mit $H_N$, Timer-Interrupts mit $T_N$ und Ausführungen der Zündwinkelberechnung mit $B_N$ angezeigt, wobei N die Indexzahl der zugehörigen Hall-Länge $t_H_N$ ist.

Unter dem Signal HALL befinden sich einige wichtige Variablen, welche in dem in dem µC 11 ablaufenden Programm verwendet werden. Die Angabe von Zeiten erfolgt aus Platzgründen in ms, wohingegen programmintem mit µs-Zeiten gearbeitet wird. Beim Start des Motors werden einige der Variablen initialisiert (Spalte INIT). t_TI und t_B werden mit 50 ms initialisiert. Dies entspricht einer Drehzahl von 300 U/min, und erst ab dieser Drehzahl wird in diesem Ausführungsbeispiel die Zündwinkelverschiebung eingeschaltet. DE und KD werden auf 0 gesetzt, da die erforderliche Drehzahl anfangs noch nicht erreicht ist, und SZW ist auch mit 0 initialisiert, da die Zündwinkelverschiebung ausgeschaltet ist.

Bei dem ersten Hall-Interrupt H0 werden das Autoreload-Register AR und der Timer CNT_HL das erste Mal mit 50 ms geladen, und der Timer CNT_HL wird gestartet. Die Hall-Länge $t_H_1$ beträgt 60 ms, so daß der Timer-Interrupt T1 vor dem Hallinterrupt H1 auftritt.

Da die Zündwinketverschiebung ausgeschaltet ist (SZW = 0), wird in der Timer-Interruptroutine als einziges der Wert DE auf 0 gesetzt (S306 in Fig. 10). Dies zeigt dem Hall-Interrupt an, daß der Motor noch nicht die Mindestdrehzahl n_min erreicht hat, da die Hall-Länge $t_H_1$ größer als die maximale Hall-Länge t_max ist, die der Mindestdrehzahl n_min entspricht. Der Timer CNT_HL wird automatisch mit dem Autoreload-Wert t_AR von 50 ms aufgeladen und gestartet.

Durch den Hall-Interrupt $H_1$ wird die Hall-Interruptroutine (Fig. 8) aufgerufen. Die Stoppzeit t_E von 40 ms, die sich daraus ergibt, daß zwischen dem Timer-Interrupt $T_1$, bei dem der Timer CNT_HL erneut auf 50 ms gesetzt wurde, und dem Hall-Interrupt $H_1$ 10 ms vergangen sind, wird gesichert. Da DE = 0 ist, wird die Kommutierung zum Zeitpunkt $H_1$ durchgeführt, t_AR und CNT_HL werden mit 50 ms geladen und der Timer CNT_HL wird gestartet. DE wird auf 1 gesetzt. Es wird keine Berechnung angefordert.

Während der Hall-Länge t_H2 erreicht der Motor erstmals im Durchschnitt die Mindestdrehzahl von 300 U/min, so daß der Hall-Interrupt $H_2$ ausgelöst wird, bevor der Timer CNT_HL auf Null heruntergezählt hat. Es findet also kein Timer-Interrupt $T_2$ statt.

In der Hall-Interruptroutine beim Hallwechsel $H_2$ wird die Stoppzeit t_E des Timers CNT_HL von 10 ms gesichert. DE hat dadurch, daß während der Hall-Länge $t_H_2$ kein Timer-Interrupt aufgetreten ist, seinen Wert DE = 1 behalten. Dadurch erkennt die Hall-Interruptroutine, daß die Drehzahl von 300 U/min überschritten wurde. In der Hall-Interruptroutine wird die Zündwinkelberechnungsroutine (Fig. 9) angefordert und die Zündwinkelverschiebung wird durch SZW := 1 aktiviert. Da innerhalb der Hall-Länge $t_H_2$ noch nicht kommutiert wurde (KD = 0), wird die Kommutierung während der Hall-Interruptroutine zum Zeitpunkt H2 durchgeführt. Das Autoreload-Register AR und der Timer CNT_HL werden mit dem beim Start des Motors auf 50 initialisierten Wert t_TI geladen, da noch keine Zündwinkelberechung durchgeführt wurde, und der Timer CNT_HL wird erneut gestartet.

Während der Hall-Länge $t_H_3$ wird das erste Mal die Berechnung der Zündwinkelverschiebung ausgeführt. Es ist kein Timer-Interrupt aufgetreten (KD = 0), so daß sich die während der Hall-Länge $t_H_3$ berechnete Hall-Länge $t_H_2$ aus t_B = 50 ms und t_E = 10 ms zu t_H = 40 ms ergibt. Hieraus ergibt sich bei einer Zündwinkelverschiebungszeit von t_ZW = 0,2 ms eine Timer-Interruptzeit von 39,8 ms. Die Timerstartzeit der Hallzeit $t_H_3$ wird in t_B gesichert.

Die Hall-Interruptroutine zum Hall-Interrupt $H_3$ läuft analog zu der Hall-Interruptroutine zum Hall-Interrupt $H_2$ ab, da der Motor weiterhin beschleunigt und der Hall-Interrupt auftritt, bevor der Timer CNT_HL den Wert 0 erreicht. Es tritt deshalb in dieser Hallzeit kein Timer-Interrupt auf. Dies geschieht ebenso bei den Hall-Interrupts $H_4$, $H_5$, $H_6$ und $H_7$. Die Zündwinkelberechnungsroutinen $B_4$, $B_5$, $B_6$ und $B_7$ werden ebenfalls in der jeweiligen Hallzeit aufgerufen.

In der Hallzeit $t_H_8$ erreicht der Motor schließlich seine Solldrehzahl von 1500 U/min, die einer Hall-Länge von 10 ms entspricht. Da bei diesem Beispiel die Timer-Interruptzeit t_TI für die Hallzeit $t_H_N$ immer während der Hallzeit $t_H_{N-1}$ aus der Hall-Länge $t_H_{N-2}$ berechnet wird, ist ein "Nachlauf" von zwei Hallzeiten vorhanden, d.h. die erste Hallzeit, bei der der Timer CNT_HL mit der korrekten Timer-Interruptzeit t_TI gestartet ist, ist $t_H_{10}$, da die Hallzeit $t_H_8$ die erste Hallzeit mit 10 ms war und das Ergebnis aus der Hall-Längenberechnung der Hallzeit von $t_H_8$ erst in $t_H_{10}$ verwendet wird.

Während der Hallzeit $t_H_{10}$ wird die Zündwinkelberechnung $B_{10}$ normal ausgeführt. Der Startwert t_TI für das Autoreload-Register AR und den Timer CNT_HL betrug während der Hall-Interruptroutine zu $H_9$ 9,8 ms.

Deshalb wird 9,8 ms nach dem Hall-Interrupt $H_9$ ein Timer-Interrupt $T_{10}$ ausgelöst. Der Timer CNT_HL wird automatisch mit dem Wert t_AR (9,8 ms) aufgeladen und erneut gestartet. Die Zündwinkelverschiebung ist eingeschaltet (SZW = 1), so daß in der Timer-Interruptroutine (T10) kommutiert wird. Das Flag KD wird auf 1 gesetzt, um der folgenden Hall-Interruptroutine zu $H_{10}$ und der Zündwinkelberechnung anzuzeigen, daß kommutiert wurde.

In der Hall-Interruptroutine zum Hall-Interrupt $H_{10}$ wird der Stoppwert des Timers CNT_HL in t_E gesichert, die Zündwinkelberechnungsroutine angefordert, das Autoreload-Register AR und der Timer CNT_HL geladen, und der Timer CNT_HL gestartet. Da die Kommutierung bereits in der Timer-Interruptroutine zum Timer-Interrupt $T_{10}$ stattgefunden hat, wird nicht mehr kommutiert.

Die folgenden Hallzeiten $t_H_{11}$ usw. verlaufen wie $t_H_{10}$, falls sich Istdrehzahl oder Solldrehzahl des Motors nicht ändern.

**Regelung des Motors**

**Fig. 13** zeigt den für Regelung und Antrieb des Motors wichtigen Teil der Schaltung. Gleiche oder gleich wirkende Teile wie in den vorhergehenden Figuren sind mit denselben Bezugszeichen bezeichnet wie dort und werden gewöhnlich nicht nochmals beschrieben.

Die Belegung der Anschlüsse des µC 11 ist wieder Fig. 3 zu entnehmen. Die Ausgänge OUT1 und OUT2 des µC 11 steuern die als H-Brücke 37 geschalteten npn-Transistoren 141, 142, 143 und 144.

Ein Ausgang RGL des µC 11 ist über einen Widerstand 123 an einen Kondensator 124 angeschlossen. Wird RGL auf HIGH gesetzt, so wird der Kondensator 124 aufgeladen, ist RGL auf LOW, so wird der Kondensator entladen, und ist RGL auf TRISTATE, so ist der Kondensator 124 von RGL abgekoppelt und hält seine Spannung. Ohne die Strombegrenzung 44, welche weiter unten beschrieben wird, könnte der Punkt 125 direkt mit dem Pluseingang des Komparators 120 verbunden werden.

Ist der npn-Transistor 150 nicht leitend, die Strombegrenzung 44 also inaktiv, so stellt sich über den Widerstand 126 an einem kleineren Kondensator 127 die gleiche Spannung wie die des Kondensators 124 ein. Über den Ausgang RGL des µC 11 kann also die Spannung an dem Pluseingang des Komparators 120 beeinflußt werden.

An dem Minuseingang des Komparators 120 liegt ein durch einen Dreiecksoszillator 35 erzeugtes Dreiecksignal an. Der Dreiecksoszillator 35 weist einen Komparator 130 auf. Vom Ausgang P3 des Komparators 130 führt ein Mitkopplungswiderstand 132 zu dessen Pluseingang, und ebenso führt ein Gegenkopplungswiderstand 131 vom Ausgang P3 des Komparators 130 zum Minuseingang des Komparators 130. Ein Kondensator 135 liegt zwischen dem Minuseingang des Komparators 130 und Masse 100. Der Ausgang des Komparators 130 ist ferner über einen Widerstand 133 mit +Vcc verbunden. Der Pluseingang des Komparators 130 ist über zwei Widerstände 134 und 136 mit +Vcc bzw. Masse 100 verbunden.

Zur Erläuterung der Wirkungsweise des Dreiecksgenerators 35 und der Steuerung des Ausgangs RGL des µC 11 durch den µC 11 wird auf DE198 36 882.8 (intern: D216) verwiesen.

Liegt die Spannung des Dreiecksignals am Minuseingang des Komparators 120 unter der des Referenzsignals am Pluseingang des Komparators 120, so ist der Ausgang OFF des Komparators 120 auf HIGH, und die unteren Transistoren 141 bzw. 143 können über die logischen UND-Glieder 147 bzw. 148 durch OUT1 bzw. OUT2 aus- und eingeschaltet werden. Liegt die Spannung des Dreieckssignals über der des Referenzsignals, so ist der Ausgang OFF des Komparators 120 auf LOW und damit kann die Statorwicklung 38 nicht bestromt werden.

Über die Spannung am Kondensator 124 und damit auch am Kondensator 127 wird also das sogenannte Tastverhältnis eingestellt, das Verhältnis der Dauer, die der Ausgang des Komparators 120 während einer Periode des Dreieckssignals auf HIGH ist zu einer ganzen Periode. Das Tastverhältnis kann zwischen 0 % und 100 % liegen. Ist die Motordrehzahl z.B. zu hoch, so wird der Kondensator 124 über RGL entladen und damit das Tastverhältnis verkleinert. Das Ganze wird als Pulsweitenmodulation (PWM) bezeichnet. Der Pullup-Widerstand 128 dient dazu, den Open-Collector-Ausgang OFF des Komparators 120 bei HIGH auf +Vcc zu ziehen.

Um beim Einschalten den Motor starten zu können, wird der Kondensator 124 bei der Initialisierung eine vorgegebene Zeitdauer über RGL aufgeladen, damit die Spannung am Kondensator 127 den erforderlichen Mindestwert für das Einschalten des Komparators 120 und damit der Brücke 37 erreicht.

Eine Strombegrenzung 44 wird dadurch verwirklicht, daß der Strom in der Statorwicklung 38 über einen Meßwiderstand 140 zu Masse 100 fließt. Je höher der Strom durch den Widerstand 140 ist, desto höher ist die Spannung an ihm und damit auch das Potential am Punkt 149.

Erreicht das Potential an 149 einen bestimmten Wert, so wird der Transistor 150 leitend und reduziert die Spannung am Kondensator 127, und das Tastverhältnis am Ausgang des Komparators 120 wird dadurch kleiner. Der Widerstand 126 verhindert, daß der große Kondensator 124 bei einer Strombegrenzung ebenfalls entladen wird, und er beschleunigt die Strombegrenzung, da der kleine Kondensator 127 schneller entladen werden kann. Nach dem Ende der aktiven Strombegrenzung wird der kleinere Kondensator 127 durch den großen Kondensator 124 wieder aufgeladen und so auf dessen Spannung gesetzt. Der Widerstand 126 und der Kondensator 127 bewirken also, daß die Strombegrenzung 44 eine höhere Priorität als die Regelung besitzt.

Die Strombegrenzung 44 weist ein Filterglied aus einem Widerstand 151 und einem Kondensator 152 gegen Masse, gefolgt von dem npn-Transistor 150, der bei einer genügend hohen Spannung an seiner Basis den Pluseingang des Komparators 120 auf Masse 100 zieht, auf. Dahinter folgt ein weiteres aus den Widerständen 153 und 155 und dem Kondensator 154 bestehendes Siebglied.

Für die Beschreibung einer alternativen Form der Strombegrenzung wird auf DE 198 26 458.5 (intern: D215) verwiesen. Sie kann wie dort auch mit Hilfe eines Komparators aufgebaut werden und programmgesteuert sein.

**EEPROM-Funktion**

**Fig. 14** zeigt den Ausschnitt der Schaltung, der das EEPROM 26 und das Businterface 30 betrifft. Die Pinbelegung des µC 11 ist wieder Fig. 3 zu entnehmen. Gleiche oder gleich wirkende Teile wie in den vorhergehenden Figuren sind mit denselben Bezugszeichen bezeichnet wie dort. Das EEPROM 26 ist z.B. vom Typ "2-Wire Serial CMOS EEPROM AT24C01A" (ATMEL)

Das EEPROM 26 erhält an seinem Dateneingang SDA das Signal ESDA (Fig. 2) des µC 11 und an seinem Eingang SCL das Signal ESCL. Beide Leitungen sind über Widerstände 172, 173 mit +Vcc verbunden.

Der Schreibschutzeingang WP des EEPROM 26 ist mit dem Pin CS (Chip Select) des µC 11 verbunden. Ist CS auf HIGH, so ist das EEPROM 26 schreibgeschützt, ist CS auf LOW, so können Daten in das EEPROM 26 geschrieben werden. Die Anschlüsse VSS, A0, A1 und A2 des EEPROM 26 sind mit Masse 100 verbunden, und der Anschluß VCC des EEPROM 26 mit +Vcc.

Die Leitungen ESDA und ESCL stellen also den seriellen Bus zwischen dem µC 11 und dem EEPROM 26 dar, der hier als IIC-Bus betrieben wird.

Normalerweise wird das EEPROM 26 in der Fabrik einmal über das Businterface 30 programmiert, eine Neuprogrammierung ist jedoch jederzeit möglich. Alternativ kann der Motor auch ohne den Bus 30 betrieben werden, wobei das EEPROM 26 dann mittels einer bekannten Vorrichtung programmiert wird, ehe man es in den Motor einsetzt.

Das Businterface 30 arbeitet mit einem IIC-Bus. Es verfügt über eine Datenleitung DATA mit einem Anschluß 160, die über einen Widerstand 162 an den Anschluß SDA des µC 11 angeschlossen ist. Vom Anschluß SDA führt ein Widerstand 165 zu +Vcc und ein Kondensator 167 zu Masse 100. Außerdem ist der Anschluß SDA mit dem Emitter eines pnp-Transistors 168 verbunden, dessen Kollektor mit Masse 100 und dessen Basis über einen Widerstand 169 mit dem Anschluß N16 des µC 11 verbunden sind.

Weiterhin hat das Businterface 30 eine Taktleitung CLOCK mit einem Anschluß 161, die über einen Widerstand 163 an den Anschluß SCL des µC 11 angeschlossen ist. Vom Anschluß SCL des µC 11 führt ein Widerstand 164 zu +Vcc und ein Kondensator 166 zu Masse 100.

Die Schaltung mit dem pnp-Transistor 168 dient dazu, sowohl den Ausgang N16 als auch den Eingang SDA des µC 11 mit der bidirektionalen Leitung DATA des IIC-Buses zu verbinden.

Für eine weitergehende Beschreibung des EEPROM 26, des Businterfaces 30 und deren Programmierung wird auf DE 198 26 458.5 (intern: D215) verwiesen.

Mit dem Businterface 30 ist es möglich, Werte im EEPROM 26 zu verändern. So kann z.B. die minimale Drehzahl n_min, ab der die Kommutierung mit Zündwinkel eingeschaltet werden soll, durch das Setzen des Werts t_SZW im EEPROM verändert werden und somit die Konfiguration des Motors geändert werden. Ebenso geändert werden kann z.B. die Zündwinkelzeit t_ZW.

**Funktionsmanager**

**Fig. 15** zeigt ein Flußdiagramm mit einer möglichen Ausführungsform des in dem µC 11 ablaufenden Gesamtprogramms. Nach dem Einschalten des Lüfters wird in dem µC 11 ein interner Reset ausgelöst. In S600 erfolgt die Initialisierung des µC 11. Es werden z.B. Parameter aus dem EEPROM 26 in das RAM des µC 11 übertragen.

Nach der Initialisierung erfolgt ein Sprung in den bereits erwähnten Funktionsmanager 190, der in S602 beginnt. Dieser regelt den Ablauf der einzelnen Unterprogramme und bestimmt deren Prioritäten.

Als erstes werden die Funktionen abgearbeitet, die zeitkritisch sind und bei jedem Durchlauf abgearbeitet werden müssen. Hierzu zählt die Kommunikationsfunktion COMM in S602, da der IIC-Bus 30 (Fig. 14) z.B. bei einer Baudrate von 2 k alle 250 µs überprüft werden muß.

Fig. 16 zeigt ein beispielhaftes Funktionsregister 195, in dem für jede weitere Funktion ein Bit reserviert ist.

In diesem Beispiel ist das Funktionsregister 195 1 Byte groß, und es sind, von dem niederwertigsten Bit (LSB) beginnend, die folgenden Anforderungsbits für die unten erklärten anforderbaren Funktionen definiert:

- Bit1: FCT_ZWV für die Zündwinkelberechnungsroutine,
- Bit2: FCT_RGL für eine Regelroutine beliebiger Art.

Die restlichen Bits sind für zusätzliche anforderbare Funktionen reserviert, die bei Bedarf in den Funktionsmanager 190 eingefügt werden können.

Soll eine bestimmte anforderbare Funktion durch eine andere Funktion oder eine Interruptroutine angefordert werden, so wird das Bit der anzufordernden Funktion auf 1 gesetzt. Das nächste Mal, wenn der Funktionsmanager 190 bei einem Durchlauf keine andere anforderbare Funktion mit höherer Priorität aufgerufen hat, so wird diese Funktion ausgeführt.

Ist eine angeforderte Funktion abgearbeitet, so setzt sie ihr Bit (Fig. 16) wieder auf 0, z.B. FCT_RGL := 0.

In Fig. 15 wird nach S602 in einer vorbestimmten Reihenfolge, von der wichtigsten anforderbaren Funktion ausgehend, jeweils geprüft, ob deren Anforderungsbit gesetzt ist. Ist dies bei einer Funktion der Fall, so wird diese ausgeführt, und daraufhin wird wieder an den Anfang S602 des Funktionsmanagers 190 gesprungen. Die Reihenfolge der Überprüfung des Funktionsregisters 195 gibt die Prioritierung der anforderbaren Funktionen vor. Je höher eine solche Funktion in dem Funktionsmanager 190 steht, desto höher ist ihre Priorität.

Die aufgerufenen Funktionen müssen so kurz sein, daß ihre Abarbeitungszeit, addiert zu den immer ausgeführten Funktionen (hier S602) und den Interruptroutinen, nie größer als die maximal zulässige Zeit zwischen zwei Abfragen des IIC-Buses 30 ist. In dem obigen Beispiel mit einer Baudrate von 2 k und einer maximal zulässigen Zeit von 250 µs liegt die maximale Abarbeitungszeit für die in S610 oder S614 aufgerufenen Funktionen bei ca. 100 µs.

In S610 wird überprüft, ob das Anforderungsbit FCT_ZWV für die Zündwinkelverschiebung gesetzt ist, also den Wert 1 hat. Ist es gesetzt, so wird nach S612 gesprungen, und die Zündwinkel-Berechnungsroutine (Fig. 9 oder 19) wird ausgeführt. Vor der Beendigung setzt die Zündwinkel-Berechnungsroutine ihr Anforderungsbit FCT_ZWV zurück und fordert in S274 durch Setzen des Anforderungsbits FCT_RGL die Regelroutine an.

War in S610 FCT_ZWV nicht gesetzt, so wird in S614 überprüft, ob FCT_RGL gesetzt ist. Ist dies der Fall, so wird in S618 eine Regelroutine zur Regelung der Motordrehzahl aufgerufen.

Waren keine der in S610 und S614 überprüften Bits gesetzt, so wird wieder nach S602 gesprungen, und die Funktionen, die bei jedem Durchlauf des Funktionsmanagers 190 ausgeführt werden, werden erneut aufgerufen.

Fig. 15 zeigt auch bei 620 symbolisch einen Hall-Interrupt, der die höchste Priorität L1 (Level 1) hat. Ein Hall-Interrupt hat diese hohe Priorität, weil die genaue Erfassung der Hall-Signale für einen ruhigen Lauf des Motors 39 sehr wichtig ist. Er unterbricht alle Prozesse des Funktionsmanagers 190, wie durch einen Pfeil 621 symbolisiert.

Unter dem Hall-Interrupt ist bei 622 ein Timer-Interrupt dargestellt. Dieser hat eine niedrigere Priorität L2 und unterbricht alle Prozesse unter ihm, wie durch den Pfeil 623 angedeutet. Eine exakte Kommutierung ist ebenfalls sehr wichtig für einen ruhigen Lauf des Motors, und deshalb hat der Timer-Interrupt 622 die zweithöchste Priorität.

Wenn Hall-Interrupt und Timer-Interrupt gleichzeitig angefordert würden, würden sie nach der Reihenfolge ihrer Priorität abgearbeitet.

Die nächstniedere Priorität L3 hat die Funktion COMM, da bei der Kommunikation über den Bus 30 keine Daten verlorengehen dürfen.

Die nächstniedere Priorität L4 hat die Funktion ZWV, die in S230 angefordert werden kann und die in Fig. 9 (oder 19) dargestellt ist.

Die niedrigste Priorität L5 hat die Funktion RGL (S614), da sich die Drehzahl eines Motors - wegen dessen mechanischer Trägheit - gewöhnlich langsam ändert, so daß die Regelfunktion meist nicht zeitkritisch ist. Ggf. kann man aber auch die Reihenfolge der Schritte S610 und S614, und damit deren Priorität, vertauschen.

Auf diese Weise gelingt es, die verschiedenen "Bedürfnisse" des Motors 39 in eine vorgegebene Hierarchie einzuordnen und die Ressourcen des µC 11 optimal für den Betrieb des Motors zu nutzen.

## Zündwinkelverschiebung unter Berücksichtigung von Magnetisierungsfehlern des Rotors 39

**Fig. 17** zeigt einen vierpoligen Außenrotor 39. Dieser hat vier radial magnetisierte Pole 534, 535, 536, 537, die in der dargestellten Weise durch (symbolisch angedeutete) Übergangsbereiche 530 bis 533 voneinander getrennt sind. Es wird als Beispiel eine sogenannte trapezförmige Magnetisierung angenommen, vgl. Fig. 18A.

Wegen der Inhomogenitäten des Magnetmaterials, und wegen unvermeidbarer Fehler in der (nicht dargestellten) Magnetisierungsvorrichtung, ist der Verlauf der Magnetflußdichte besonders in den Übergangsbereichen 530 bis 533 nicht exakt definiert, sondern von Rotor zu Rotor etwas verschieden.

Nimmt man an, daß sich der Rotor 39 in Richtung des Pfeiles 540 am Hallgenerator 40 vorbeidreht, so erhält man am Hallgenerator 40 eine Hallspannung $u_H$, deren Verlauf in Fig. 18A - wegen der Anschaulichkeit stark übertrieben - dargestellt ist. Der Teil 534' dieser Hallspannung $u_H$ wird vom Rotorpol 534 (Nordpol) erzeugt und ist etwas zu kurz, d.h. die Nulldurchgänge dieser Hallspannung liegen bei 0° el. und etwa 170° el. statt - wie gewünscht - bei 0° el. und exakt 180° el.

Der Teil 535' der Hallspannung wird vom Rotorpol 535 erzeugt. Er beginnt bei etwa 170° el., endet bei etwa 370° el., und ist zu lang.

Der Teil 536' wird vom Rotorpol 536 erzeugt und erstreckt sich von etwa 370° el. bis etwa 550° el., hat also zwar die richtige Länge, aber nicht die richtige Phasenlage.

Der Teil 537' wird vom Rotorpol 537 erzeugt und erstreckt sich von etwa 550° el. bis 720° el., ist also etwas zu kurz. 720° el. entspricht bei diesem Motor wieder 0° el., weil sich der Rotor 39 dann einmal voll gedreht hat, und der Spannungsverlauf wiederholt sich dann, was in Fig. 18A bei 534'A angedeutet ist.

**Fig. 18B** zeigt das zugehörige Signal HALL, welches ein Spiegelbild der eben erläuterten Magnetisierungsfehler ist, d.h. sein erster Abschnitt 534" ist zu kurz, sein zweiter Abschnitt 535" ist zu lang, sein dritter Abschnitt 536" ist phasenverschoben, und sein vierter Abschnitt 537" ist zu kurz. Nach dem Winkel 720° el. beginnt ein Abschnitt 534"A, der - bei konstanter Drehzahl - dem Abschnitt 534" entspricht.

Die Abschnitte 534" und 537" täuschen also eine zu hohe Drehzahl vor, und der Abschnitt 535" eine zu niedrige Drehzahl.

Wird der Abschnitt 534" verwendet, um die Zeit t_TI für den Abschnitt 536" zu berechnen, wie das bei dem vorhergehenden Ausführungsbeispiel erläutert wurde, so wird im Abschnitt 536" zu früh kommutiert.

Wird der Abschnitt 535" verwendet, um die Zeit t_TI für den Abschnitt 537" zu berechnen, so wird dort zu spät kommutiert.

Dies kann zu einem unregelmäßigen Lauf des Motors und zu erhöhten Motorgeräuschen führen.

Deshalb wird nach der Erfindung bevorzugt die Hall-Länge eines Abschnitts des Signals HALL dazu verwendet, um die Zeit t_TI für den eine Rotorumdrehung späteren Abschnitt zu berechnen, wie das in Fig. 5 mit den Bezugszeichen 304, 306, 308 für einen vierpoligen Rotor symbolisch an einem Beispiel dargestellt ist. Z.B. wird in Fig. 18B die Hall-Länge $t_H_N$ des Abschnitts 534" dazu verwendet, um die Zeit t_TI für den Abschnitt 534"A zu berechnen, wie das symbolisch und beispielhaft bei 542, 544, 546 dargestellt ist. Dann treten diese Fehler nicht auf, denn bei konstanter Drehzahl sind z.B. die Abschnitte 534" und 534"A identisch, so daß sich Fehler nicht addieren können.

**Fig. 19** zeigt eine entsprechende geänderte Zündwinkelberechnungsroutine für die Kommutierung mit Zündwinkelverschiebung, wobei in der beschriebenen bevorzugten Weise eine Kompensation der Magnetisierungsfehler des Rotors 39 stattfindet. Alle Teile, die bereits in Fig. 9 vorgekommen sind, erhalten die gleichen Bezugszeichen wie dort und werden deshalb nicht nochmals beschrieben. Der Leser wird auf die dortige Beschreibung verwiesen.

Im Schritt 268' werden anstatt der direkten Berechnung des Timerstartwerts t_TI (vgl. S268 in Fig. 9) zwei Variablen t_4 und t_3 zusätzlich verwendet, um die berechneten Timerstartwerte t_TI zwischenzuspeichem. Dem für die folgende Hallzeit $t_H_N$ verwendeten Timer Startwert t_TI wird der aus der Hall-Länge $t_H_{N-4}$ berechnete Timerstartwert t_4 zugeordnet.

Anschließend werden die berechneten Timerstartwerte verschoben, so daß sie für die nächste Zündwinkelberechnung in der richtigen Variablen stehen. Der Wert t_3, der aus der Hall-Länge $t_H_{N-3}$ berechnet wurde, wird nach t_4 verschoben, und der in der aktuellen Zündwinkelberechnung berechnete Timer Startwert (t_H - t_ZW), wird in t_3 gespeichert. (Hierbei ist t_H die Hall-Länge $t_H_{N-2}$).

Weiterhin ist der Schritt S267 neu eingefügt. Die Speichervariablen t_4 und t_3 werden beim Ausschalten der Zündwinkelverschiebung (in S266: SZW: = 0) auf den Wert 50.000 gesetzt, damit sie einen definierten Zustand haben.

**Fig. 20** zeigt eine beispielhafte Hall-Interruptroutine für eine erfindungsgemäße Kommutierung ohne Zündwinkelverschiebung, wie sie in Fig. 4 dargestellt ist. Bei jedem Hall-Interrupt (Y in Fig. 4) wird das gerade ablaufende Programm unterbrochen, die sogenannte Umgebung des µC 11 (z.B. der Stapelzeiger [stack pointer] und die Register) wird abgespeichert, und die zu dem Interrupt gehörige Interrupt-Routine wird aufgerufen. Wenn die Interrupt-Routine abgearbeitet ist, gibt sie einen Befehl RETI (Return From Interrupt). Daraufhin wird die Umgebung des µC 11 so, wie sie vor dem Interrupt war, wieder hergestellt, und das unterbrochene Programm arbeitet weiter.

In diesem Ausführungsbeispiel wird für die Messung der Hall-Länge HL (Fig. 4) ebenfalls der 16 Bit-Timer CNT_HL verwendet, der, beginnend bei einem vorgegebenen Startwert, fortlaufend herunterzählt und beim Erreichen von 0, wenn die Zählung fortgesetzt wird, wieder auf seinen maximalen Wert springt, sich also wie ein Ringzähler verhält. Dieser Timer ist auch hier Bestandteil des µC 11. Die Hall-Länge HL kann hier z.B. für eine Drehzahlregelung verwendet werden.

In S702 wird die Ist-Hall-Länge HL (vgl. Fig. 4) bestimmt. Ein aktueller Timerwert t_E (Fig. 4) wird aus dem Timer CNT_HL ausgelesen, und durch die Subtraktion eines gespeicherten "alten" Timerwerts t_O (Fig. 4: Der Zeitpunkt des vorhergehenden Timer-Interrupts Y) wird die Hall-Länge HL berechnet. Hierzu wird t_E - t_O berechnet und von dem Ergebnis das Zweierkomplement gebildet. So erhält man immer die korrekte Zählerdifferenz, falls der Zähler nicht mehr als die Hälfte seines maximalen Werts weitergelaufen ist.

Daraufhin wird der aktuelle Timerwert t_E in t_O gespeichert (S702). Die Auflösung des in diesem Ausführungsbeispiels verwendeten Timers CNT_HL ist 1 µs, die Hall-Länge HL liegt also in µs vor.

Ist z.B. t_O = 45000 und t_E = 35000, so erhält man eine Hall-Länge HL = (45000 - 35000) = 10000, was 10000 µs entspricht.

In den folgenden Schritten wird die Kommutierung ausgeführt. In S704 wird geprüft, ob HALL = 1 (HIGH) ist. Ist HALL = 1, so wird in S710 OUT2 auf LOW gesetzt. Jetzt sind OUT1 und OUT2 auf LOW, und in S712 wird eine zeitliche Kommutierungslücke eingefügt, um bei der Kommutierung einen Kurzschluß in der Brückenschaltung 37 zu verhindern. Die Kommutierungslücke hat z.B. eine Dauer von 50 µs. In S714 wird OUT1 auf HIGH gesetzt. In S716 wird schließlich der Port Hall des µC 11 konfiguriert, bei welcher Flanke er einen Hall-Interrupt HALL_INT auslösen soll. Die Flanke kann entweder so eingestellt werden, daß bei dem Übergang HIGH nach LOW (fallende Flanke) ein Interrupt ausgelöst wird, oder aber bei dem Übergang von LOW nach HIGH (steigende Flanke). Da in dem Zweig S710 bis S716 das Hall-Signal auf HIGH ist, muß der Port HALL auf einen Interrupt bei fallender Flanke, also HIGH nach LOW eingestellt werden, damit beim nächsten Hall-Wechsel wieder ein Hall-Interrupt ausgelöst wird. Dies geschieht in S716.

Ist in S704 HALL = 0 (LOW), so geschieht in S720, S722, S724 analog die umgekehrte Kommutierung, und bei S726 das umgekehrte Setzen von HALL_INT. - In S730 wird die Hall-Interruptroutine gemäß Fig. 20 verlassen.

**Fig. 21** zeigt schematisch den Ablauf der Kommutierung bei n > 300 U/min, z.B. bei 2.000 U/min, also mit Zündwinkelverschiebung.

Bei Fig. 21 A ist das Rotorstellungssignal HALL dargestellt, das jeweils an den Stellen $H_N$, $H_{N+1}$, $H_{N+2}$ einen rotorstellungsabhängigen Interrupt (Fig. 8) auslöst, also einen Hall-Interrupt, wie in Fig. 4 bei Y angegeben.

Beginnend beim Hall-Interrupt $H_N$ wird durch den Timer CNT_HL die Zeit t_TI gemessen, die nach der Gleichung (6) aus den Werten t_HN und t_ZW berechnet wurde. Der Wert t_ZW kann, wie bereits angegeben, über den Bus 30 geändert werden.

Zum Zeitpunkt $T_{N+1}$ erreicht der Timer CNT_HL den Wert 0 und löst eine Motorsteuerungs-Interruptroutine gemäß Fig. 10 aus, also einen Timer-Interrupt.

Gemäß S310 in Fig. 10 werden zum Zeitpunkt $T_{N+1}$ die Signale OUT2 (Fig. 21B) und OUT1 (Fig. 21 C) beide zu Null gemacht, d.h. die Wicklung 38 wird von der Stromzufuhr getrennt, und nach einer Kommutierungslücke t_G (bewirkt durch die Programmschritte S312, S314, S316) wird bei S322 das Signal OUT1 auf HIGH gesetzt, da HALL = 1 ist, während OUT2 auf LOW bleibt, wie im Schritt S310 gespeichert. OUT1 = HIGH bedeutet, daß in Fig. 1 die Transistoren 141 und 144 leitend werden.

Ebenso werden zum Zeitpunkt $T_{N+2}$ durch den Schritt S310 der Routine gemäß Fig. 10 die beiden Signale OUT1 und OUT2 auf LOW gesetzt, und anschließend wird nach der Kommutierungslücke t_G der Wert OUT2 auf HIGH gesetzt, da HALL = 0 ist, vgl. die Schritte S318, S322 der Fig. 10, während der Wert OUT1 den Wert LOW beibehält, der im Schritt S310 gespeichert wurde. Dadurch werden in Fig. 1 die Transistoren 142 und 143 leitend.

**Fig. 22** zeigt unten das Signal HALL, und oben den Strom i_M (Fig. 1) in der einzigen Statorwicklung 38. Bei Fig. 22 ist die Zündwinkelverschiebung ausgeschaltet, d.h. t_ZW = 0. Man erkennt, daß sich nach einer Kommutierung zum Zeitpunkt $H_N$ (Änderung des Signals HALL) der Strom i_M nur langsam ändert. Er erreicht deshalb in diesem Fall nur eine niedrige Amplitude, d.h. der Motor M erzeugt nur eine niedrige Leistung.

Fig. 23 zeigt wieder unten das Signal HALL, und darüber den Strom i_M (Fig. 1), aber mit verfrühter Kommutierung ("Frühzündung"), d.h. der Strom i_M wird um die Zeit t_ZW früher als der Hallwechsel $H_N$ kommutiert. Man erkennt deutlich, daß sich der Strom i_M nach der Kommutierung sofort sehr rasch ändert und eine wesentlich höhere Amplitude erreicht als bei Fig. 22, d.h. der Motor M erzeugt in diesem Fall eine höhere Leistung und kann deshalb eine höhere Drehzahl erreichen. Die Kommutierung liegt bei Fig. 23 etwa 15° el. vor einem Wechsel des Signals HALL.

Es folgt eine Tabelle mit typischen Beispielen für die Werte der verwendeten Bauteile:

| Kondensatoren: | |
|---|---|
| 135 | 1,5 nF |
| 127, 152 | 10 nF |
| 99, 110, 166, 167 | 33 nF |
| 154 | 100 nF |
| Tantalkondensator 124 | 3,3 µF |
| Widerstände: | |
| 140 | 3 Ω |
| 162, 163 | 47 Ω |
| 153, 155 | 1 kΩ |
| 133, 136 | 2,2 kΩ |
| 106 | 3,3 kΩ |
| 164, 165 | 4,7 kΩ |
| 123, 131, 132 | 10 kΩ |
| 172, 173 | 22 kΩ |
| 114, 126 | 33 kΩ |
| 134 | 47 kΩ |
| 101, 112, 128, 169 | 100 kΩ |
| npn-Transistor 150 | BC846 |

(fortgesetzt)

| Widerstände: | |
|---|---|
| pnp-Transistor 168 | BC856B |
| Komparatoren 108, 120, 130 | LM2901 D |
| Hallsensors 40 | HW101A |
| EEPROM 26 | 2-Wire Serial CMOS EEPROM |
| AT24C01A (ATMEL) | |
| Mikrocontroller 11 | COP842CJ (Nat. Semicond.) |

**Patentansprüche**

**1.** Elektronisch kommutierter Motor, welcher aufweist:

Einen Stator;
einen Rotor (39);
einen zur Steuerung der Kommutierung des Motors (M) dienenden programmgesteuerten Mikroprozessor oder Mikrocontroller (11), im folgenden Mikroprozessor genannt, welcher Mikroprozessor einen Timer (CNT_HL) aufweist, welcher zur Auslösung einer Interruptroutine bei Erreichen eines bestimmten Zählerstandes ausgebildet ist,
und welcher Mikroprozessor ein Programm zur Ausführung folgender Schritte aufweist:

A) Eine zur Drehzahl des Rotors (39) im wesentlichen umgekehrt proportionale Zeitgröße (t_H) wird erfasst;
B) ausgehend von der zur Drehzahl des Rotors (39) im wesentlichen umgekehrt proportionalen Zeitgröße (t_H) wird ein Startwert (t_TI) berechnet;
C) Der Timer (CNT_HL) wird bei mindestens einer vorgegebenen Rotorstellung mit dem vorgegebenen Startwert (t_TI) gestartet, um nach Ablauf einer von dem Startwert (t_TI) abhängigen Zeit eine Motorsteuerungs-Interruptroutine (Fig. 10) im Programm des Mikroprozessors (11) auszulösen, welche Programmschritte zum Bewirken einer Kommutierung (Fig. 10: S318, S320, S322) des Motors (M) enthält, um so eine Frühzündung, also eine mit steigender Drehzahl früher beginnende Kommutierung, zu bewirken.

**2.** Motor nach Anspruch 1, welcher einen Rotorstellungsgeber (40, 41) aufweist, dessen Ausgangssignal (HALL) zwecks Auswertung durch den Mikroprozessor (11) einem interruptfähigen Eingang dieses Mikroprozessors (11) zugeführt wird, um an vorgegebenen Rotorstellungen eine rotorstellungsabhängige Interruptroutine (Fig. 8) auszulösen.

**3.** Motor nach Anspruch 2, bei welchem bei jedem Wechsel des Ausgangssignals (HALL) des Rotorstellungsgebers (40, 41) eine rotorstellungsabhängige Interruptroutine (Fig. 8) ausgelöst wird.

**4.** Motor nach Anspruch 3, bei welchem die rotorstellungsabhängigen Interruptroutinen (Fig. 8) zur Messung der zur Drehzahl des Rotors (39) im wesentlichen umgekehrt proportionalen Zeitgröße (t_H) dienen.

**5.** Motor nach einem der vorhergehenden Ansprüche, bei welchem zur Berechnung des Startwerts (t_TI) eine vorgegebene Zeit (t_ZW) von der zur Drehzahl des Rotors (39) im wesentlichen umgekehrt proportionalen Zeitgröße (t_H) subtrahiert wird.

**6.** Motor nach einem der vorhergehenden Ansprüche, bei welchem die Motorsteuerung-Interuptroutine (Fig. 10) Programmschritte (S304, S306) aufweist, welche das Bewirken einer Kommutierung durch diese Interruptroutine verhindern, wenn die von der zur Drehzahl des Rotors (39) im wesentlichen umgekehrt proportionalen Zeitgröße (t_H) abhängige Zeit (t_TI) größer ist als eine Zeitspanne (t_H), die der Rotor (39) aktuell zum Durchlaufen eines vorgegebenen Winkelwegs benötigt.

**7.** Motor nach einem der vorhergehenden Ansprüche, bei welchem zur Erfassung der zur Drehzahl des Rotors (39) im wesentlichen umgekehrt proportionalen Zeitgröße (t_H) ein von den rotorstellungsabhängigen Interruptroutinen (Fig. 8) steuerbarer Timer (CNT_HL) vorgesehen ist.

**8.** Motor nach Anspruch 7, bei welchem der Timer (CNT_HL) auch zur Auslösung der Motorsteuerungs-Interruptroutine (Fig. 10) ausgebildet ist.

**9.** Motor nach Anspruch 8, bei welchem der Timer (CNT_HL) während eines rotorstellungsabhängigen Interrupts (Fig. 8) mit einem ersten vorgegebenen Zählwert (t_B) ladbar ist, welcher dem von der zur Drehzahl des Rotors (39) im wesentlichen umgekehrt proportionalen Zeitgröße (t_H) abhängigen zeitlichen Abstand (t_TI) entspricht, und welcher nach Zählen dieses ersten vorgegebenen Zählwerts die Auslösung der Motorsteuerungs-Interruptroutine (Fig. 10) bewirkt.

**10.** Motor nach einem der vorhergehenden Ansprüche, bei welchem ein rotorstellungsabhängiger Interrupt (Fig. 8) eine höhere Priorität hat als ein Motorsteuerungs-Interrupt (Fig. 10).

**11.** Motor nach einem der vorhergehenden Ansprüche, bei welchem der Timer (CNT_HL) während einer Motorsteuerungs-Interruptroutine (Fig. 10: S302) mit einem vorgegebenen Zählwert (t_AR) ladbar ist,
und im Anschluss an diesen Ladevorgang eine Zählung bis zum nächsten rotorstellungsabhängigen Interrupt (Fig. 8) erfolgt, um durch Bildung der Differenz zwischen dem vorgegebenen Zählwert (t_AR) und dem Zählerstand (t_E) bei Erreichen des nächsten rotorstellungsabhängigen Interrupts (Fig. 8) einen zeitlichen Abstand (Fig. 7A: t_1) zwischen diesen Interruptvorgängen zu ermitteln.

**12.** Motor nach Anspruch 11, bei welchem zum Laden des vorgegebenen Zählwerts (t_AR) ein Autoreload-Register (AR) vorgesehen ist, welches den ersten vorgegebenen Zählwert (t_TI) speichert und dem Timer (CNT_HL) während der Motorsteuerungs-Interruptroutine (Fig. 10) als vorgegebenen Zählwert zuführt.

**13.** Motor nach einem der vorhergehenden Ansprüche, welchem ein nichtflüchtiger Speicher (26) zugeordnet ist, welcher zum Speichern mindestens eines Parameters (t_ZW) dient, welcher für Berechnungen bei der Kommutierung dient.

**14.** Motor nach Anspruch 13, bei welchem dem nichtflüchtigen Speicher (26) ein Bus (30) zugeordnet ist, über welchen mindestens ein Parameter im nichtflüchtigen Speicher (26) veränderbar ist.

**15.** Verfahren zur drehzahlabhängigen Kommutierung eines elektronisch kommutierten Motors nach einem der vorhergehenden Ansprüche, welcher einen Stator und einen Rotor aufweist, ferner einen zur Steuerung seiner Kommutierung dienenden programmgesteuerten Mikroprozessor oder Mikrocontroller, im folgenden Mikroprozessor genannt, mit folgenden Schritten:

a) eine zur Drehzahl des Rotors im wesentlichen umgekehrt proportionale Zeitgröße (t_H) wird ermittelt;
b) aus dieser Zeitgröße (t_H) wird nach einer vorgegebenen Rechenregel ein Zahlenwert (t_TI) errechnet;
c) beginnend bei einer vorgegebenen ersten Rotorstellung wird eine diesem errechneten Zahlenwert entsprechende erste Zeit gemessen;
d) nach Ablauf dieser ersten Zeit wird eine Motorsteuerungs-Interruptroutine im Programm des Mikroprozessors ausgelöst, welche Programmschritte zum Beuertken einer Kommutierung des Motors enthält, um so erste Frühzündung also eine mit steigender Drehzahl Früher beginnde Kommutierung, zu bewirken;
e) im Anschluß hieran wird bis zum Erreichen einer vorgegebenen zweiten Rotorstellung eine zweite Zeit (t_1) gemessen;
f) erste und zweite Zeit werden addiert, und ihre Summe wird, ggf. durch mindestens einen Korrekturfaktor korrigiert, als eine *aktualisierte* zur Drehzahl des Motors im wesentlichen umgekehrt proportionale Zeitgröße (t_H) verwendet *(Fig. 7).*

**16.** Verfahren nach Anspruch 15, bei weichem die vorgegebene Rechenregel einen Subtraktionsschritt aufweist, bei welchem von der zur Drehzahl des Rotors im wesentlichen umgekehrt proportionalen Zeitgröße (t_H) eine vorgegebene Zeit (t_ZW) subtrahiert wird.

**17.** Verfahren nach Anspruch 15 oder 16, bei welchem dann, wenn die dem errechneten Zahlenwert (t_TI) entsprechende erste Zeit größer ist als der zeitliche Abstand zwischen der vorgegebenen ersten Rotorstellung und der vorgegebenen zweiten Rotorstellung, der zeitliche Abstand zwischen diesen beiden Rotorstellungen direkt erfaßt und als eine zur Drehzahl des Motors im wesentlichen umgekehrt proportionale Zeitgröße (t_H) verwendet wird (S256).

**18.** Verfahren nach einem oder mehreren der Ansprüche 15 bis 17, bei welchem die zur Drehzahl des Motors im wesentlichen umgekehrt proportionale Zeitgröße (t_H) mit einem einer Mindestdrehzahl entsprechenden vorgegebenen Wert (t_SZW) verglichen wird (Fig. 9: S264),
ein dem Vergleichsresultat entsprechender logischer Wert (SZW) zwischengespeichert wird (Fig. 9: S266),
und bei einem vorgegebenen Wert dieses logischen Werts (SZW) die nach Ablauf der ersten Zeit (t_TI) erfolgende Auslösung einer Kommutierung unterdrückt wird (Fig. 10: S304, S306).

**19.** Verfahren nach einem oder mehreren der Ansprüche 15 bis 18, bei welchem bei Erreichen einer vorgegebenen Rotorstellung ein rotorstellungsabhängiger Interrupt mit einer Interruptroutine (Fig. 8A, 8B) ausgeführt wird, zu deren Beginn ein zur Zeitmessung dienender Timer (CNT_HL) angehalten (S202) und sein augenblicklicher Wert in einer Variablen (t_E) gespeichert wird.

**20.** Verfahren nach Anspruch 19, bei welchem in der rotorstellungsabhängigen Interruptroutine der zur Zeitmessung dienende Timer (CNT_HL) zeitlich nach seinem Anhalten (S202) mit einem zuvor nach der vorgegebenen Rechenregel berechneten Zahlenwert (t_TI) geladen und dann gestartet wird (Fig. 8B: S238).

**21.** Verfahren nach Anspruch 19 und 20, bei welchem die Zeitspanne zwischen dem Anhalten des zur Zeitmessung dienenden Timers (CNT_HL) und seinem Starten als Korrekturfaktor (t_CORR) verwendet wird, wenn die zur Drehzahl des Motors im wesentlichen umgekehrt proportionale Zeitgröße (t_H) ermittelt wird.

**22.** Verfahren nach einem oder mehreren der Ansprüche 15 bis 21, bei welchem die dem errechneten Zahlenwert (t_TI) entsprechende erste Zeit, welche ab einer vorgegebenen ersten Rotorstellung gemessen wird, aus einer der Drehzahl des Rotors im wesentlichen umgekehrt proportionalen Zeitgröße errechnet wird, welche etwa eine Rotorumdrehung vor dem Zeitpunkt ermittelt wurde, an dem die aktuelle Messung der ersten Zeit erfolgt (Fig. 18: 542, 544, 546).

**23.** Verfahren nach einem oder mehreren der Ansprüche 15 bis 22, bei welchem mindestens ein nicht zeitkritischer Verfahrensschritt als Unterroutine (Fig. 9) ausgebildet ist, welche im Programmablauf aufgerufen wird, wenn Prozessorzeit verfügbar ist (Fig. 15).

**24.** Verfahren nach Anspruch 23, bei welchem die Berechnung der zur Drehzahl des Motors im wesentlichen umgekehrt proportionalen Zeitgröße (t_H) und die Berechnung des der Messung der ersten Zeit zugrundeliegenden Zahlenwerts (t_TI) in einer solchen Unterroutine (Fig. 9) erfolgen.

**25.** Verfahren nach einem oder mehreren der Ansprüche 15 bis 24, bei welchem mindestens ein für Berechnungen erforderlicher Parameter (t_ZW) aus einem dem Motor zugeordneten nichtflüchtigen Speicher (26) in ein RAM (25) des Mikroprozessors (11) geladen wird.

**26.** Verfahren nach Anspruch 25, bei welchem dem nichtflüchtigen Speicher (26) ein Bus (30) zugeordnet ist, über welchen mindestens ein Parameter im nichtflüchtigen Speicher (26) veränderbar ist.

## Claims

**1.** Electronically commutated motor which comprises:

a stator;
a rotor (39);
a programme-controlled microprocessor or microcontroller (11) serving for control of the commutation of the motor (M), referred to in the following as a microprocessor, which microprocessor comprises a timer (CNT_HL) which is designed to initiate an interrupt routine on reaching a specific counter state, and which microprocessor comprises a programme for execution of the following steps:

A) a time variable (t_H) essentially inversely proportional to the rotational speed of the rotor (39) is detected;
B) a starting value (t_TI) is calculated starting from the time variable (t_H) essentially inversely proportional to the rotational speed of the rotor (39) ;
C) the timer (CNT_HL) is started in at least one predetermined rotor position with the predetermined starting value (t_TI) in order to initiate a motor controlling interrupt routine (fig. 10) in the programme of the microprocessor (11) after a time dependent on the starting value (t_TI) has elapsed, which routine contains programme steps for production of a commutation operation (fig. 10: S318, S320, S322) of the motor (M) in order to produce advanced firing, i.e. commutation beginning earlier as the rotational speed rises.

**2.** Motor according to claim 1, which comprises a rotor position sensor (40, 41) whose output signal (HALL) is fed for evaluation by the microprocessor (11) to an interrupt-enabled input of this microprocessor (11) in order to initiate an interrupt routine (fig. 8) dependent on the rotor position in predetermined rotor positions.

**3.** Motor according to claim 2, in which an interrupt routine (fig. 8) dependent on the rotor position is initiated with every change of the output signal (HALL) of the rotor position sensor (40, 41).

**4.** Motor according to claim 3, in which the interrupt routines (fig. 8) dependent on the rotor position are used for measurement of the time variable (t_H) essentially inversely proportional to the rotational speed of the rotor (39).

**5.** Motor according to one of the preceding claims, in which a predetermined time (t_ZW) is subtracted from the time variable (t_H) essentially inversely proportional to the rotational speed of the rotor (39) for calculation of the starting value (t_TI).

**6.** Motor according to one of the preceding claims, in which the motor-controlling interrupt routine (fig. 10) comprises programme steps (S304, S306) which prevent the production of a commutation operation by this interrupt routine when the time (t_TI) dependent on the time variable (t_H) essentially inversely proportional to the rotational speed of the rotor (39) is greater than a period of time (t_H) which the rotor (39) currently requires to run through a predetermined angular distance.

**7.** Motor according to one of the preceding claims, in which a timer (CNT_HL) controllable by the interrupt routines (fig. 8) dependent on the rotor position is provided for detection of the time variable (t_H) essentially inversely proportional to the rotational speed of the rotor (39).

**8.** Motor according to claim 7, in which the timer (CNT_HL) is also designed to initiate the motor-controlling interrupt routine (fig. 10).

**9.** Motor according to claim 8, in which during an interrupt (fig. 8) dependent on the rotor position the timer (CNT_HL) can be loaded with a first predetermined counting value (t_B) which corresponds to the length of time (t_TI) dependent on the time variable (t_H) essentially inversely proportional to the rotational speed of the rotor (39), and which causes the initiation of the motor-controlling interrupt routine (fig. 10) after this first predetermined counting value has been counted.

**10.** Motor according to one of the preceding claims, in which an interrupt (fig. 8) dependent on the rotor position has a higher priority than a motor-controlling interrupt (fig. 10).

**11.** Motor according to one of the preceding claims, in which during a motor-controlling interrupt routine (fig. 10: S302) the timer (CNT_HL) can be loaded with a predetermined counting value (t_AR), and following this loading operation counting takes place to the next interrupt (fig. 8) dependent on the rotor position in order to determine a length of time (fig. 7A: t_1) between these interrupt operations by forming the difference between the predetermined counting value (t_AR) and the counter state (t_E) on reaching the next interrupt (fig. 8) dependent on the rotor position.

**12.** Motor according to claim 11, in which an auto-reload register (AR) is provided for loading of the predetermined counting value (t_AR), which stores the first predetermined counting value (t_TI) and feeds this to the timer (CNT_HL) as the predetermined counting value during the motor-controlling interrupt routine (fig. 10).

**13.** Motor according to one of the preceding claims, which has associated therewith a non-volatile memory (26) which serves for storage of at least one parameter (t_ZW) which serves for calculations during commutation.

**14.** Motor according to claim 13, in which the non-volatile memory (26) has associated therewith a bus (30) through which at least one parameter in the non-volatile memory (26) can be changed.

**15.** Method for rotational speed-dependent commutation of an electronically commutated motor according to one of the preceding claims, which comprises a stator and a rotor, plus a programme-controlled microprocessor or microcontroller serving for control of its commutation, referred to in the following as a microprocessor, with the following steps:

a) a time variable (t_H) essentially inversely proportional to the rotational speed of the rotor is determined;
b) a numerical value (t_TI) is calculated from this time variable (t_H) according to a predetermined calculating rule;
c) a first time corresponding to this calculated numerical value is measured beginning in a predetermined first rotor position;
d) after this first time has elapsed a motor-controlling interrupt routine in the programme of the microprocessor is initiated, which contains programme steps for producing a commutation operation of the motor in order to produce advanced firing, i.e. commutation beginning earlier as the rotational speed rises;
e) following this, a second time (t_1) is measured until a predetermined second rotor position is reached;
f) the first and second times are added and their sum, if necessary corrected by at least one correction factor, is used as an updated time variable (t_H) essentially inversely proportional to the rotational speed of the motor (fig. 7).

**16.** Method according to claim 15, wherein the predetermined calculating rule comprises a subtraction step in which a predetermined time (t_ZW) is subtracted from the time variable (t_H) essentially inversely proportional to the rotational speed of the rotor.

**17.** Method according to claim 15 or 16, wherein when the first time corresponding to the calculated numerical value (t_TI) is greater than the length of time between the predetermined first rotor position and the predetermined second rotor position, the length of time between these two rotor positions is detected directly and used as a time variable (t_H) essentially inversely proportional to the rotational speed of the motor (S256).

**18.** Method according to one or more of claims 15 to 17, wherein the time variable (t_H) essentially inversely proportional to the rotational speed of the motor is compared with a predetermined value (t_SZW) corresponding to a minimum rotational speed (fig. 9: S264), a logic value (SZW) corresponding to the comparison result is temporarily stored (fig. 9: S266),
and when this logic value (SZW) has a predetermined value, the initiation of a commutation operation taking place after the first time (t_TI) has elapsed is suppressed (fig. 10: S304, S306).

**19.** Method according to one or more of claims 15 to 18, wherein on reaching a predetermined rotor position an interrupt dependent on the rotor position is executed with an interrupt routine (figs. 8A, 8B) at the beginning of which a timer (CNT_HL) serving for time measurement is stopped (S202) and its instantaneous value is stored in a variable (t_E).

**20.** Method according to claim 19, wherein in the interrupt routine dependent on the rotor position chronologically after its stoppage (S202), the timer (CNT_HL) serving for time measurement is loaded with a numerical value (t_TI) calculated previously according to the predetermined calculating rule and then started (fig. 8B: S238).

**21.** Method according to claim 19 and 20, wherein the period of time between the stoppage of the timer (CNT_HL) serving for time measurement and its starting is used as a correction factor (t_CORR) when the time variable (t_H) essentially inversely proportional to the rotational speed of the motor is determined.

**22.** Method according to one or more of claims 15 to 21, wherein the first time corresponding to the calculated numerical value (t_TI) and measured from a predetermined first rotor position is calculated from a time variable essentially inversely proportional to the rotational speed of the rotor determined roughly one rotor revolution before the point in time at which the current measurement of the first time takes place (fig. 18: 542, 544, 546).

**23.** Method according to one or more of claims 15 to 22, wherein at least one non time-critical step is designed as a subroutine (fig. 9) which is called up in the sequence of operations of the programme when processor time is available (fig. 15).

**24.** Method according to claim 23, wherein the calculation of the time variable (t_H) essentially inversely proportional to the rotational speed of the motor and the calculation of the numerical value (t_TI) forming the basis of the measurement of the first time take place in such a subroutine (fig. 9).

**25.** Method according to one or more of claims 15 to 24, wherein at least one parameter (t_ZW) required for calculations is loaded from a non-volatile memory (26) associated with the motor into a RAM (25) of the microprocessor (11).

**26.** Method according to claim 25, wherein the non-volatile memory (26) has associated therewith a bus (30) through which at least one parameter in the non-volatile memory (26) can be changed.

**Revendications**

**1.** Moteur à commutation électronique, lequel présente :

un stator ;
un rotor (39);
un microprocesseur ou microcontrôleur (11) commandé par programme, appelé dans la suite microprocesseur, servant à la commande de la commutation du moteur (M), lequel microprocesseur présente un compteur de temps ou chronographe-compteur (CNT_HL) qui est conçu pour déclencher une routine d'interruption lorsqu'il atteint une position de compteur donnée,
et lequel microprocesseur présente un programme pour l'exécution des étapes suivantes :

A) saisie d'une valeur de temps (t_H) essentiellement inversement proportionnelle à la vitesse de rotation du rotor (39) ;
B) partant de la valeur de temps (t_H) essentiellement inversement proportionnelle à la vitesse de rotation du rotor (39), calcul d'une valeur de démarrage (t_TI);
C) démarrage du compteur de temps (CNT_HL) à au moins une position de rotor définie avec la valeur de démarrage (t_TI) définie pour, à l'expiration d'un temps dépendant de la valeur de démarrage (t_TI), déclencher une routine d'interruption de commande du moteur (fig. 10) dans le programme du microprocesseur (11), laquelle contient des pas de programme pour le déclenchement d'une commutation (fig. 10 : S318, S320, S322) du moteur (M) afin de causer ainsi une avance à l'allumage, c'est-à-dire une commutation commençant plus tôt à mesure que la vitesse de rotation augmente.

**2.** Moteur selon la revendication 1, lequel présente un capteur de position de rotor (40, 41) dont le signal de sortie (HALL) est amené aux fins d'évaluation par le microprocesseur (11) à une entrée interruptible de ce microprocesseur (11) pour déclencher une routine d'interruption dépendante de la position du rotor (fig. 8) à des positions de rotor définies.

**3.** Moteur selon la revendication 2, dans lequel on déclenche une routine d'interruption dépendante de la position du rotor (fig. 8) à chaque alternance du signal de sortie (HALL) du capteur de position de rotor (40, 41).

**4.** Moteur selon la revendication 3, dans lequel les routines d'interruption dépendantes de la position du rotor (fig. 8) servent à la mesure de la valeur de temps (t_H) essentiellement inversement proportionnelle à la vitesse de rotation du rotor (39).

**5.** Moteur selon l'une des revendications précédentes, dans lequel, pour calculer la valeur de démarrage (t_TI), on soustrait un temps défini (t_ZW) de la valeur de temps (t_H) essentiellement inversement proportionnelle à la vitesse de rotation du rotor (39).

**6.** Moteur selon l'une des revendications précédentes, dans lequel la routine d'interruption de commande du moteur (fig. 10) présente des pas de programme (S304, S306) qui empêchent le déclenchement d'une commutation par cette routine d'interruption si le temps (t_TI) dépendant de la valeur de temps (t_H) essentiellement inversement proportionnelle à la vitesse de rotation du rotor (39) est plus grand qu'un intervalle de temps (t_H) que le rotor (39) met actuellement pour parcourir une course angulaire définie.

**7.** Moteur selon l'une des revendications précédentes, dans lequel il est prévu un compteur de temps (CNT_HL) commandable par les routines d'interruption dépendantes de la position du rotor (fig. 8) pour la saisie de la valeur de temps (t_H) essentiellement inversement proportionnelle à la vitesse de rotation du rotor (39).

**8.** Moteur selon la revendication 7, dans lequel le compteur de temps (CNT_HL) est aussi conçu pour déclencher la routine d'interruption de commande du moteur (fig. 10).

**9.** Moteur selon la revendication 8, dans lequel le compteur de temps (CNT_HL) peut être chargé, pendant une interruption dépendante de la position du rotor (fig. 8), avec une première valeur de comptage définie (t_B) qui correspond à l'intervalle de temps (t_TI) dépendant de la valeur de temps (t_H) essentiellement inversement proportionnelle à la vitesse de rotation du rotor (39),
et lequel provoque après comptage de cette première valeur de comptage définie le déclenchement de la routine d'interruption de commande du moteur (fig. 10).

**10.** Moteur selon l'une des revendications précédentes, dans lequel une interruption dépendante de la position du rotor (fig. 8) a une priorité plus élevée qu'une interruption de commande du moteur (fig. 10).

**11.** Moteur selon l'une des revendications précédentes, dans lequel le compteur de temps (CNT_HL) peut être chargé, pendant une interruption de commande du moteur (fig. 10 ; S302), avec une valeur de comptage définie (t_AR), et dans lequel on effectue à la suite de ce chargement un comptage jusqu'à la prochaine interruption dépendante de la position du rotor (fig. 8) pour, par formation de la différence entre la valeur de comptage définie (t_AR) et la position du compteur (t_E) à l'atteinte de la prochaine interruption dépendante de la position du rotor (fig. 8), déterminer un intervalle de temps (fig. 7A : t_1) entre ces interruptions.

**12.** Moteur selon la revendication 11, dans lequel il est prévu pour charger la valeur de comptage définie (t_AR) un registre autorechargeable (AR) qui mémorise la première valeur de comptage définie (t_TI) et la délivre au compteur de temps (CNT_HL) en tant que valeur de comptage définie pendant l'interruption de commande du moteur (fig. 10).

**13.** Moteur selon l'une des revendications précédentes, auquel est associée une mémoire non volatile (26) qui sert à mémoriser au moins un paramètre (t_ZW) qui sert pour des calculs lors de la commutation.

**14.** Moteur selon la revendication 13, dans lequel à la mémoire non volatile (26) est associé un bus (30) via lequel on peut modifier au moins un paramètre dans la mémoire non volatile (26).

**15.** Procédé de commutation en fonction de la vitesse de rotation d'un moteur à commutation électronique selon l'une des revendications précédentes, lequel présente un stator et un rotor ainsi qu'un microprocesseur ou microcontrôleur commandé par programme, appelé dans la suite microprocesseur, comportant les étapes suivantes :

a) détermination d'une valeur de temps (t_H) essentiellement inversement proportionnelle à la vitesse de rotation du rotor ;
b) partant de cette valeur de temps (t_H), calcul d'une valeur numérique (t_TI) selon une règle de calcul définie ;
c) à partir d'une première position de rotor définie, mesure d'un premier temps correspondant à cette valeur numérique calculée ;
d) à l'expiration de ce premier temps, déclenchement d'une routine d'interruption de commande du moteur dans le programme du microprocesseur, laquelle contient des pas de programme pour le déclenchement d'une commutation du moteur afin de causer ainsi une avance à l'allumage, c'est-à-dire une commutation commençant plus tôt à mesure que la vitesse de rotation augmente ;
e) à la suite de cela, mesure d'un deuxième temps (t_1) jusqu'à l'atteinte d'une deuxième position de rotor définie ;
f) addition du premier et du deuxième temps et utilisation de leur somme, le cas échéant corrigée par au moins un facteur de correction, comme valeur de temps (t_H) *actualisée* essentiellement inversement proportionnelle à la vitesse de rotation du moteur *(fig. 7)*.

**16.** Procédé selon la revendication 15, dans lequel la règle de calcul définie présente une étape de soustraction dans laquelle on soustrait un temps défini (t_ZW) de la valeur de temps (t_H) essentiellement inversement proportionnelle à la vitesse de rotation du rotor.

**17.** Procédé selon la revendication 15 ou 16, dans lequel, lorsque le premier temps correspondant à la valeur numérique calculée (t_TI) est plus grand que l'intervalle de temps entre la première position de rotor définie et la deuxième position de rotor définie, on saisit directement l'intervalle de temps entre ces deux positions de rotor et on l'utilise comme valeur de temps (t_H) essentiellement inversement proportionnelle à la vitesse de rotation du moteur (S256).

**18.** Procédé selon l'une ou plusieurs des revendication 15 à 17, dans lequel on compare la valeur de temps (t_H) essentiellement inversement proportionnelle à la vitesse de rotation du moteur avec une valeur définie (t_SZW) correspondant à une vitesse de rotation minimale (fig. 9 : S264),
on mémorise une valeur logique (SZW) correspondant au résultat de la comparaison (fig. 9 : S266),
et on empêche le déclenchement d'une commutation ayant lieu à l'expiration du premier temps (t_TI) si cette valeur logique (SZW) a une valeur définie (fig. 10 : S304, S306).

**19.** Procédé selon l'une ou plusieurs des revendication 15 à 18, dans lequel, à l'atteinte d'une position de rotor définie, on exécute une interruption dépendante de la position du rotor avec une routine d'interruption (fig. 8A, 8B) au début de laquelle on arrête un compteur de temps (CNT_HL) servant à la mesure du temps et on mémorise sa valeur actuelle dans une variable (t_E).

**20.** Procédé selon la revendication 19, dans lequel, dans la routine d'interruption dépendante de la position du rotor, on charge le compteur de temps (CNT_HL) servant à la mesure du temps après son arrêt (S202) avec une valeur numérique (t_TI) auparavant calculée selon la règle de calcul définie et on le redémarre ensuite (fig. 8B : S238).

**21.** Procédé selon les revendications 19 et 20, dans lequel on utilise l'intervalle de temps entre l'arrêt du compteur de temps (CNT_HL) servant à la mesure du temps et son démarrage comme facteur de correction (t_CORR) lors de la détermination de la valeur de temps (t_H) essentiellement inversement proportionnelle à la vitesse de rotation du moteur.

**22.** Procédé selon l'une ou plusieurs des revendication 15 à 21, dans lequel on calcule le premier temps correspondant à la valeur numérique calculée (t_TI), lequel est mesuré à partir d'une première position de rotor définie, à partir d'une valeur de temps essentiellement inversement proportionnelle à la vitesse de rotation du moteur qui a été déterminée à peu près un tour de rotor avant l'instant auquel on effectue la mesure actuelle du premier temps (fig. 18 : 542, 544, 546).

**23.** Procédé selon l'une ou plusieurs des revendication 15 à 22, dans lequel au moins une étape de procédé non à durée critique est conçue comme une sous-routine (fig. 9) qui est appelée pendant l'exécution du programme lorsque du temps processeur est disponible (fig. 15).

**24.** Procédé selon la revendication 23, dans lequel le calcul de la valeur de temps (t_H) essentiellement inversement proportionnelle à la vitesse de rotation du moteur et le calcul de la valeur numérique (t_TI) servant de base à la mesure du premier temps sont effectués dans une telle sous-routine (fig. 9).

**25.** Procédé selon l'une ou plusieurs des revendication 15 à 24, dans lequel on charge au moins un paramètre (t_ZW) nécessaire pour des calculs dans une RAM (25) du microprocesseur (11) à partir d'une mémoire volatile (26) associée au moteur.

**26.** Procédé selon la revendication 25, dans lequel à la mémoire volatile (26) est associé un bus (30) via lequel on peut modifier au moins un paramètre dans la mémoire non volatile (26).

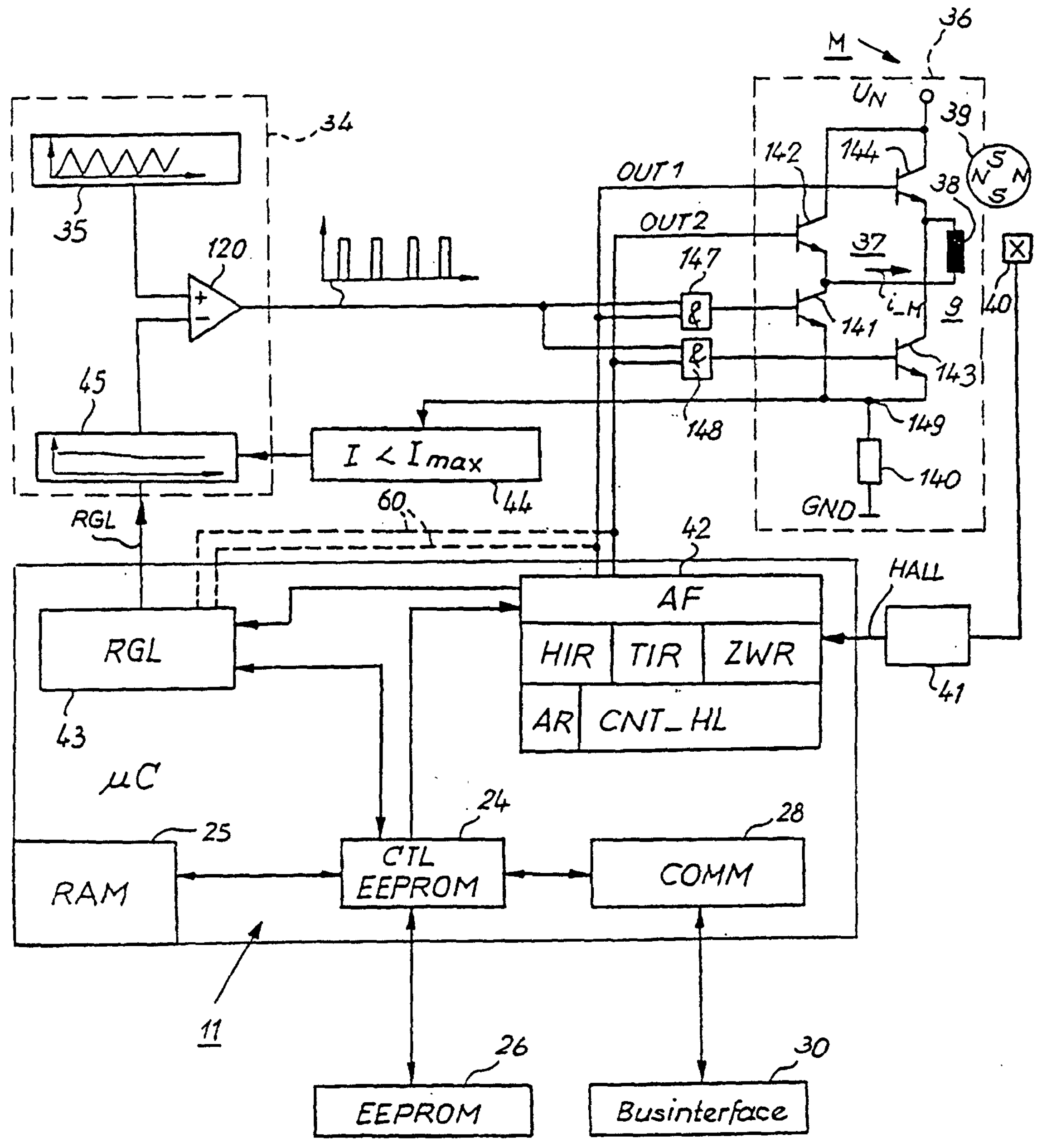
M
36
$U_N$
39
34
142
144
OUT1
38
35
OUT2
120
37
147
$i_M$
9
40
141
143
45
148
149
I < Imax
140
44
60
GND
RGL
42
HALL
AF
RGL
HIR
TIR
ZWR
43
AR
CNT_HL
41
µC
24
28
25
CTL EEPROM
COMM
RAM
11
26
30
EEPROM
Businterface

Fig. 1

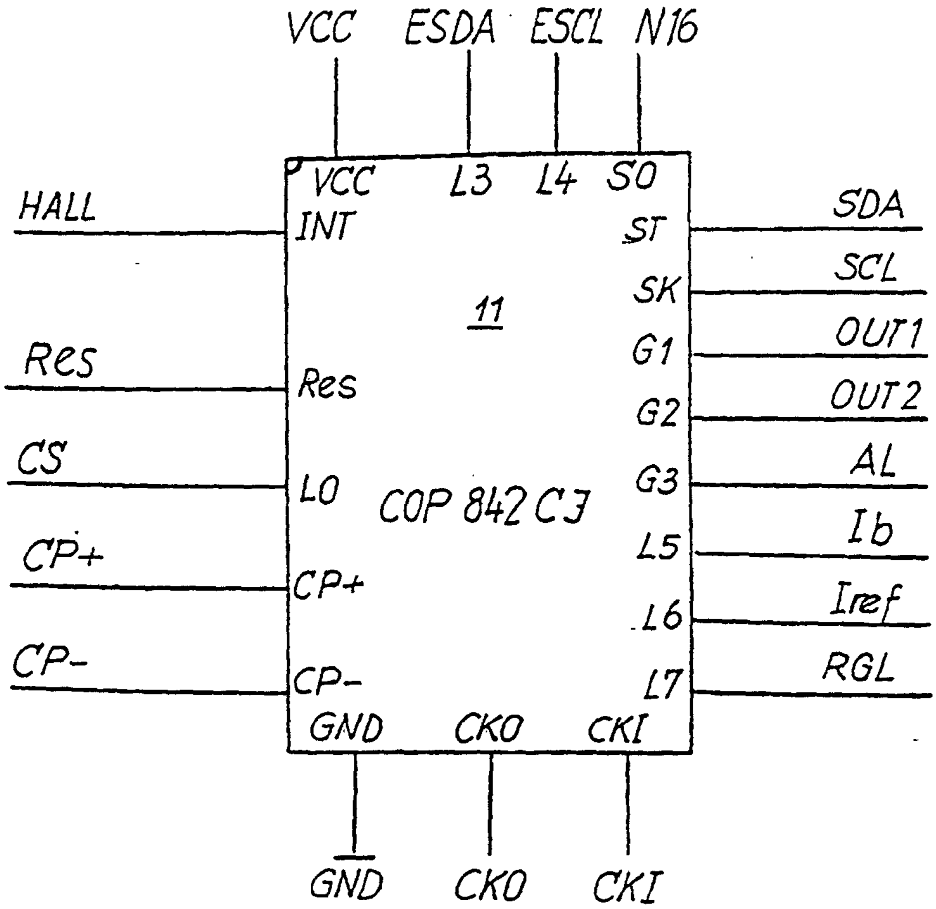
VCC
ESDA
ESCL
N16
VCC
L3
L4
S0
HALL
INT
ST
SDA
SK
SCL
11
G1
OUT1
Res
Res
G2
OUT2
CS
L0
G3
AL
COP 842 CJ
L5
Ib
CP+
CP+
L6
Iref
CP-
CP-
L7
RGL
GND
CKO
CKI
GND
CKO
CKI

Fig. 2

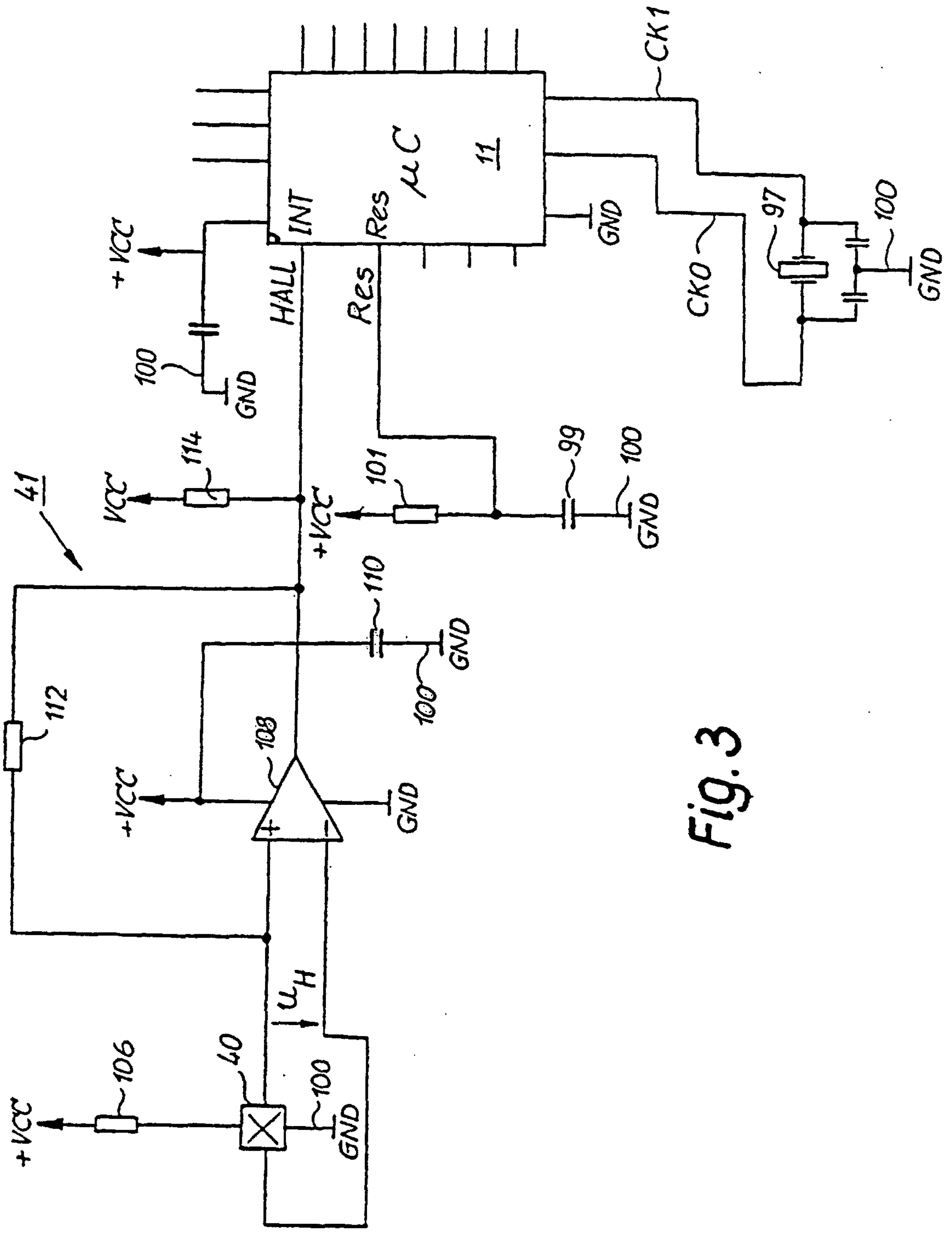
CK1
μC
11
INT
Res
GND
97
100
GND
CK0
+VCC
HALL
Res
100
GND
114
VCC
41
101
+VCC
99
100
GND
110
GND
100
112
108
+VCC
GND
+
-
$u_H$
106
40
100
GND
+VCC

Fig. 3

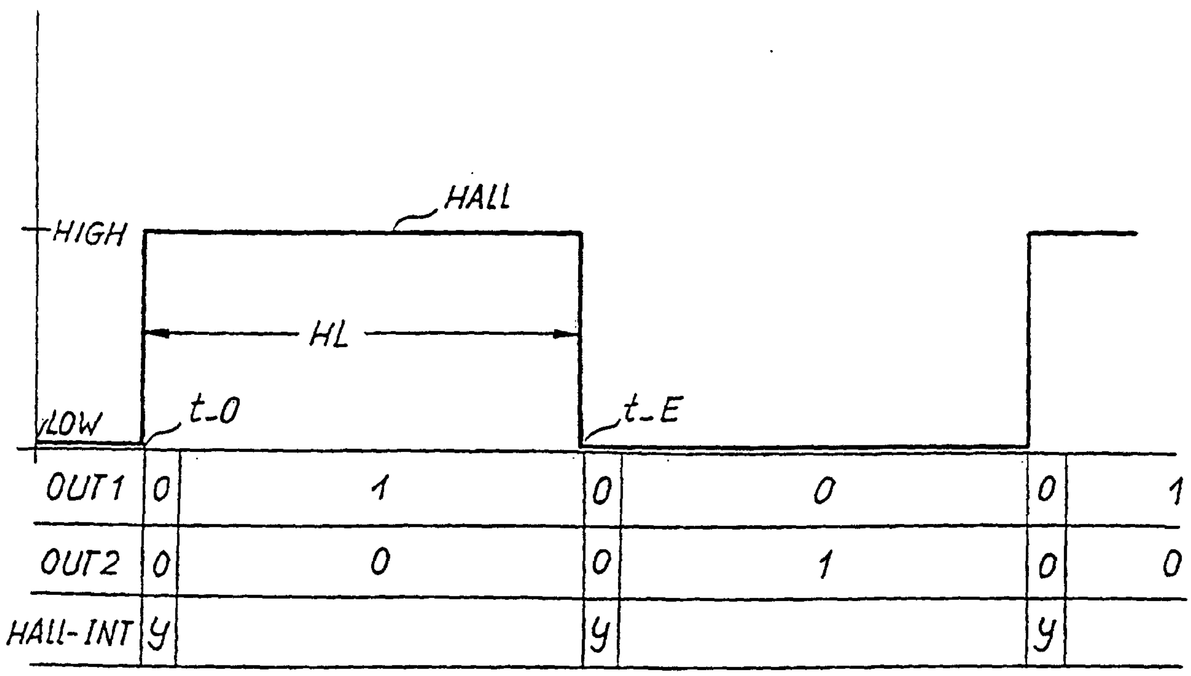


Fig. 4

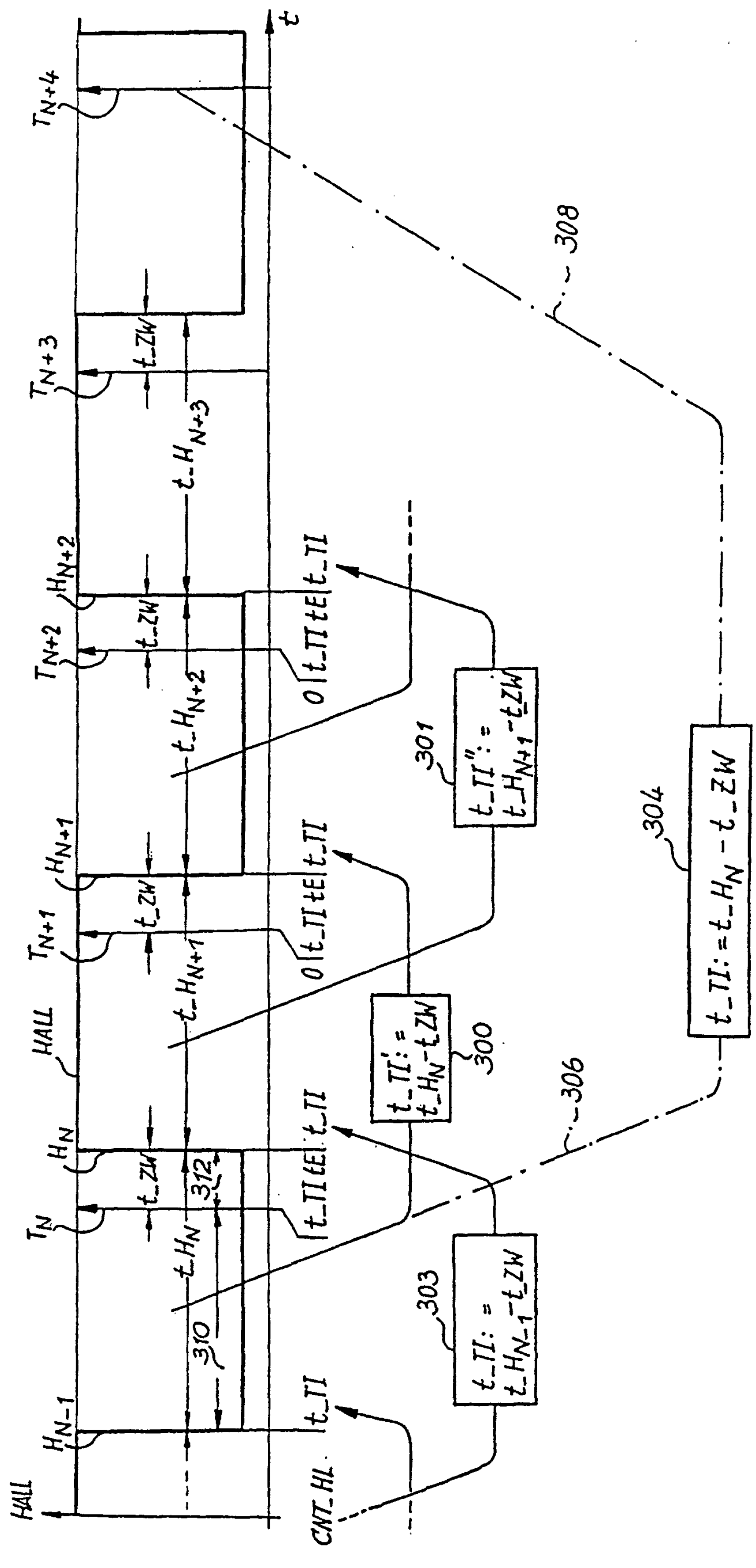

HALL
t
CNT_HL
H_N-1
T_N
H_N
T_N+1
H_N+1
T_N+2
H_N+2
T_N+3
T_N+4
t_ZW
t_H_N
t_H_N+1
t_H_N+2
t_H_N+3
t_TI
t_TI: = t_H_N-1 - t_ZW
t_TI': = t_H_N - t_ZW
t_TI'': = t_H_N+1 - t_ZW
t_TI: = t_H_N - t_ZW
300
301
303
304
306
308
310
312


Fig.5

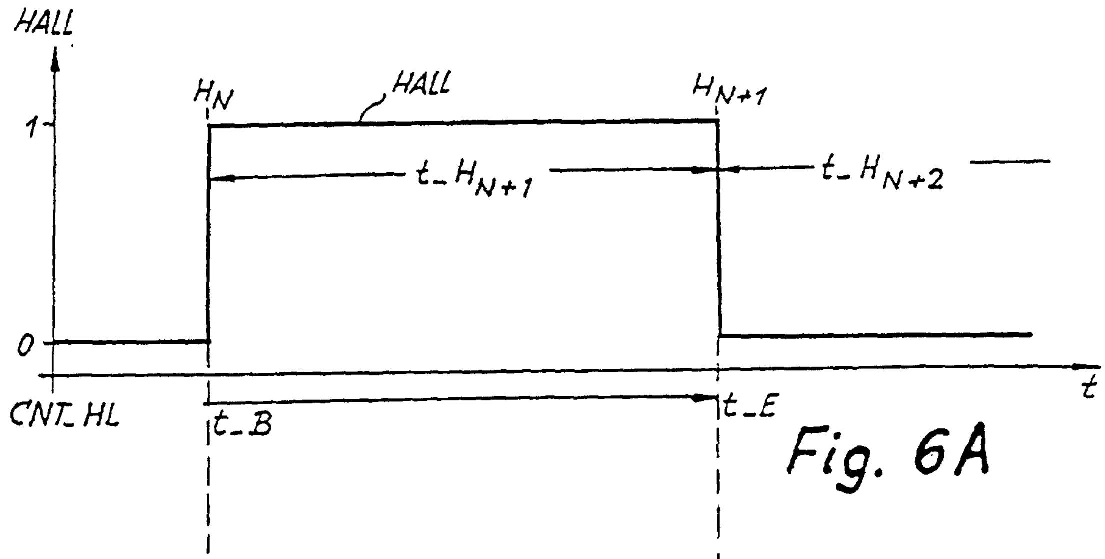
HALL
1
0
H_N
HALL
H_N+1
t_H_N+1
t_H_N+2
t
CNT_HL
t_B
t_E

Fig. 6A

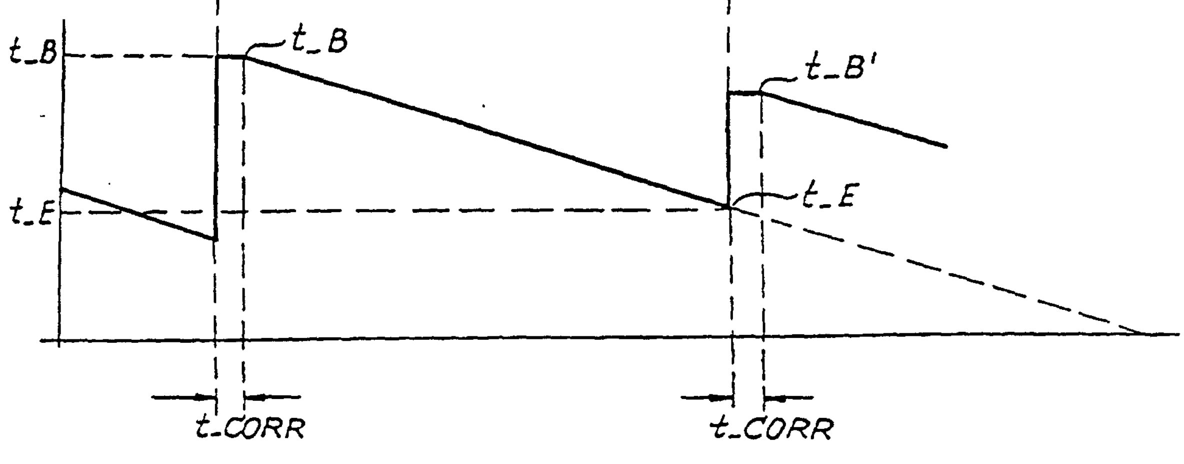
t_B
t_E
t_B
t_B'
t_E
t_CORR
t_CORR

Fig. 6B

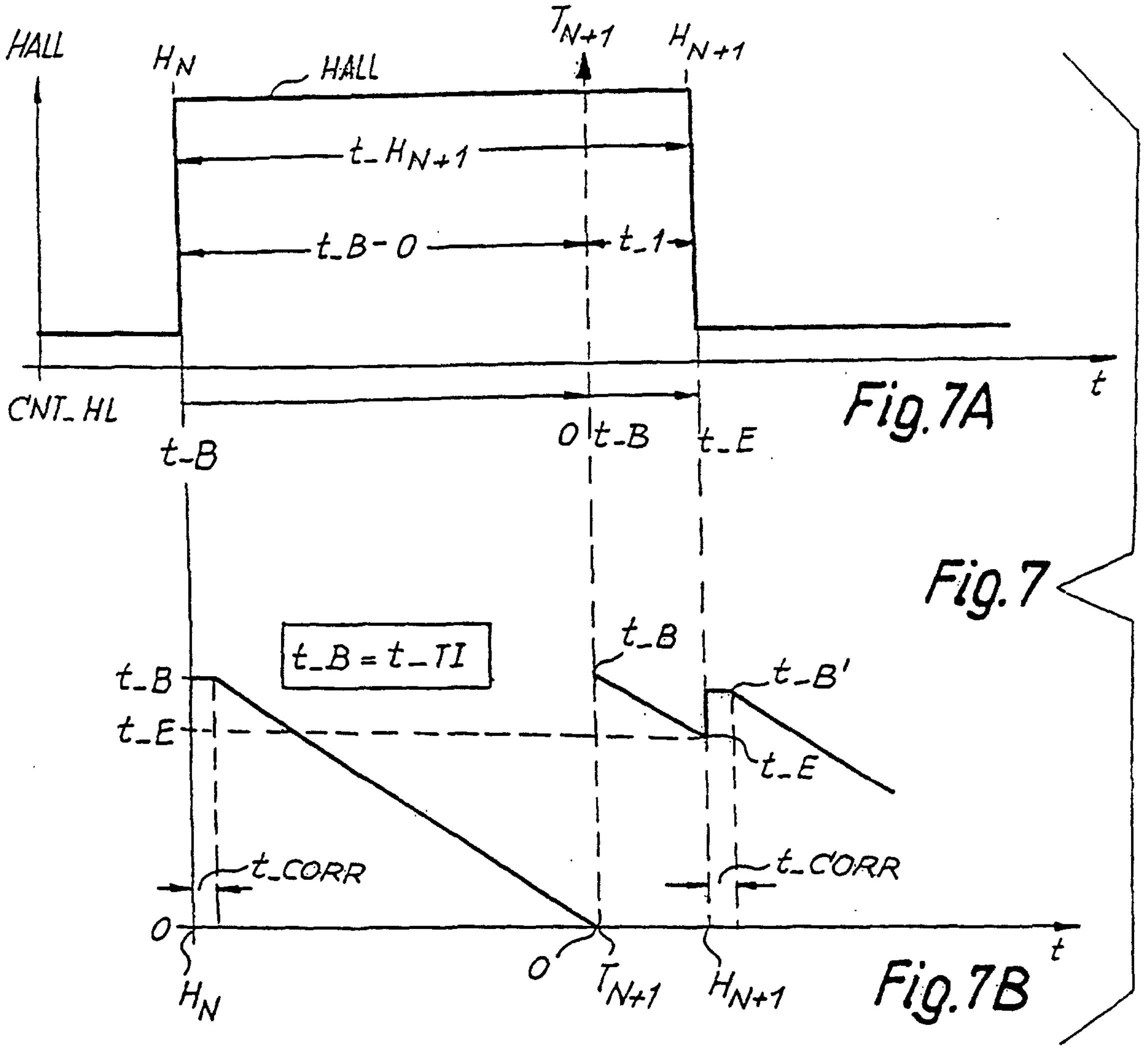
HALL
$H_N$
HALL
$T_{N+1}$
$H_{N+1}$
t_$H_{N+1}$
t_B-0
t_1
t
CNT_HL
t_B
0 t_B
t_E
Fig.7A
Fig.7
t_B = t_TI
t_B
t_E
t_B
t_B'
t_E
t_CORR
t_CORR
0
$H_N$
0
$T_{N+1}$
$H_{N+1}$
t
Fig.7B

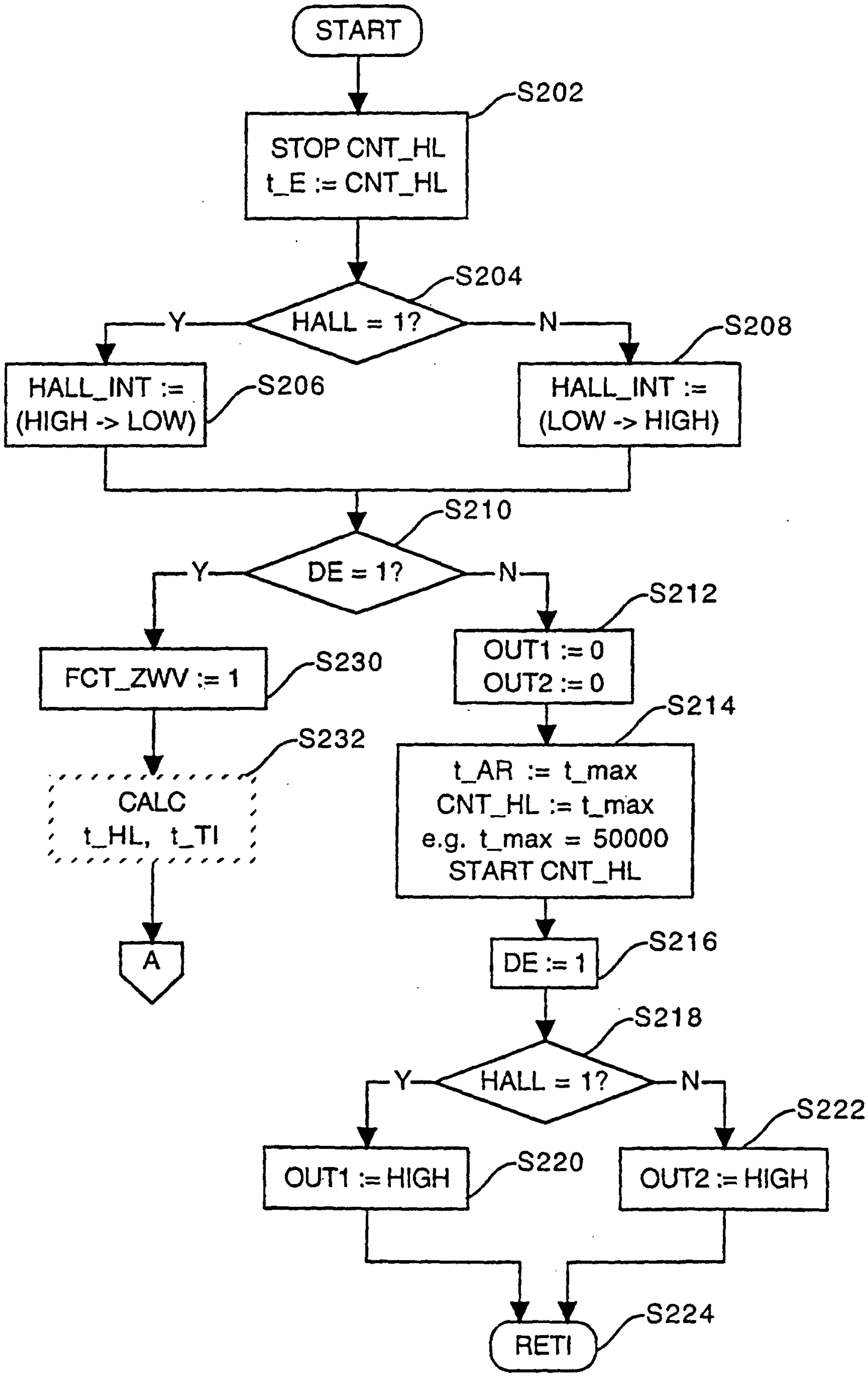
START
S202
STOP CNT_HL
t_E := CNT_HL
S204
HALL = 1?
Y
N
S206
HALL_INT :=
(HIGH -> LOW)
S208
HALL_INT :=
(LOW -> HIGH)
S210
DE = 1?
Y
N
S230
FCT_ZWV := 1
S232
CALC
t_HL, t_TI
A
S212
OUT1 := 0
OUT2 := 0
S214
t_AR := t_max
CNT_HL := t_max
e.g. t_max = 50000
START CNT_HL
S216
DE := 1
S218
HALL = 1?
Y
N
S220
OUT1 := HIGH
S222
OUT2 := HIGH
S224
RETI

Fig. 8A

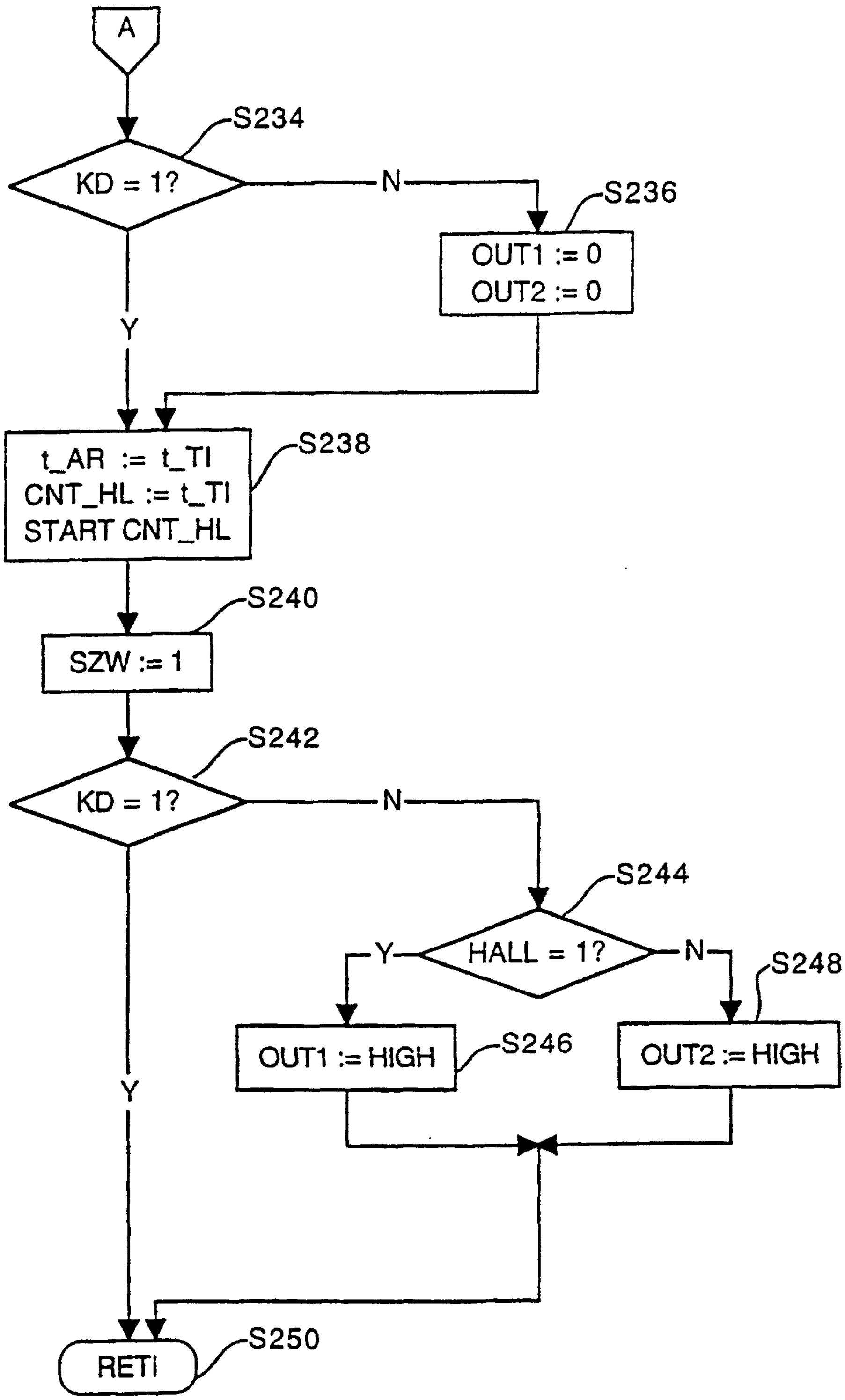
A
S234
KD = 1?
N
S236
OUT1 := 0
OUT2 := 0
Y
t_AR := t_TI
CNT_HL := t_TI
START CNT_HL
S238
S240
SZW := 1
S242
KD = 1?
N
S244
HALL = 1?
Y
N
S248
OUT1 := HIGH
S246
OUT2 := HIGH
Y
RETI
S250

Fig. 8B

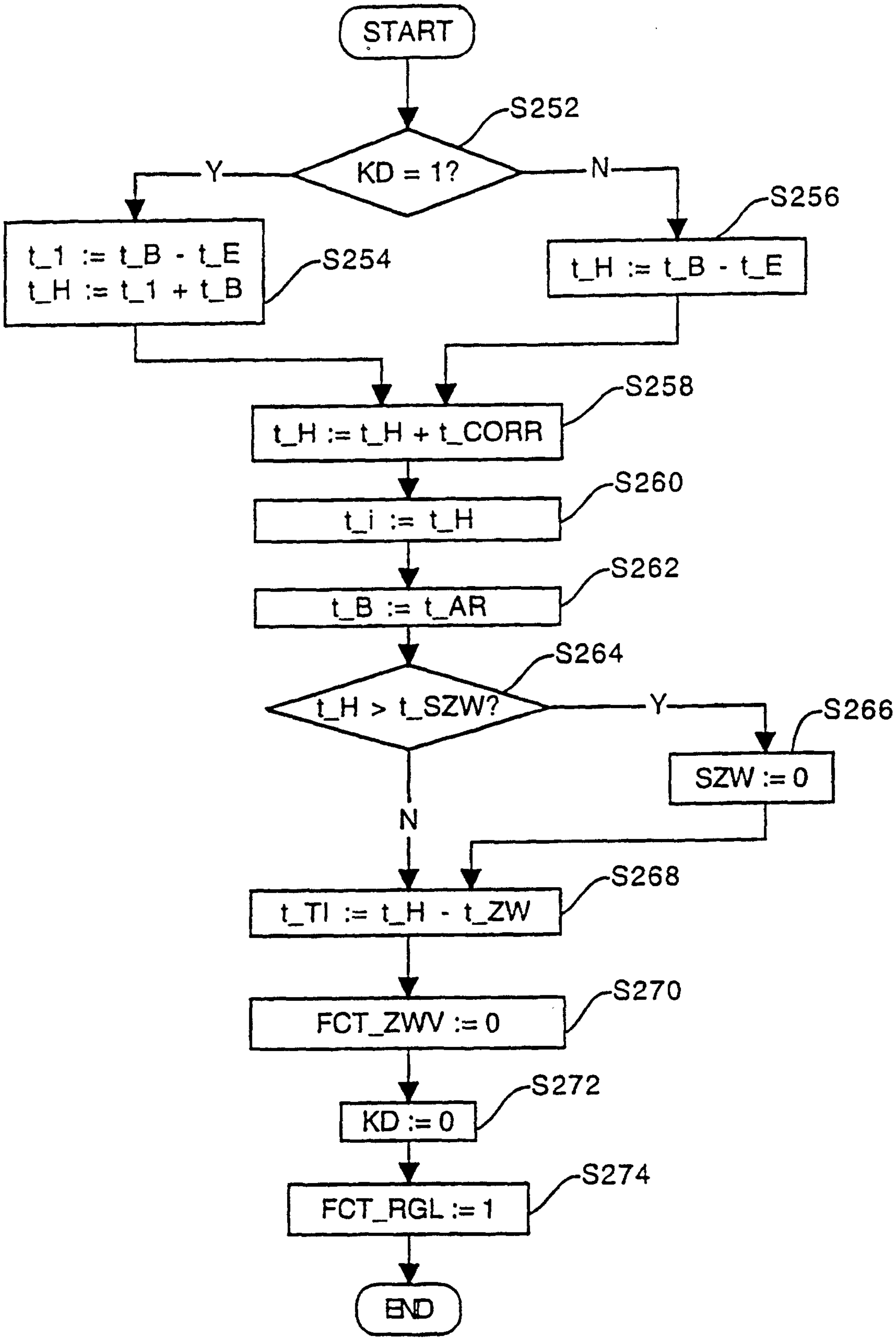
START
S252
KD = 1?
Y
N
S256
t_1 := t_B - t_E
t_H := t_1 + t_B
S254
t_H := t_B - t_E
S258
t_H := t_H + t_CORR
S260
t_i := t_H
S262
t_B := t_AR
S264
t_H > t_SZW?
Y
S266
SZW := 0
N
S268
t_TI := t_H - t_ZW
S270
FCT_ZWV := 0
S272
KD := 0
S274
FCT_RGL := 1
END

Fig. 9

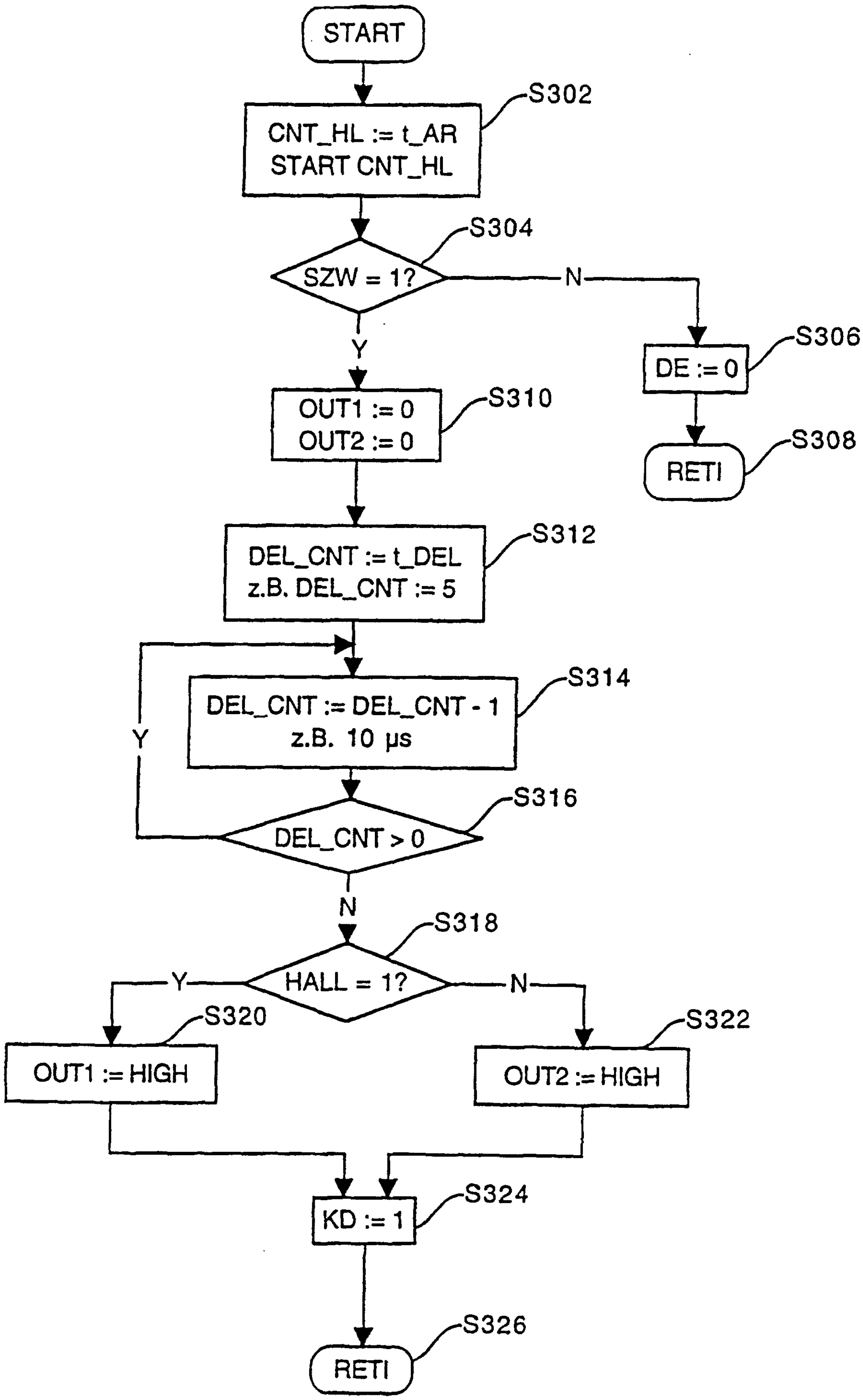
START
CNT_HL := t_AR
START CNT_HL
S302
SZW = 1?
S304
N
Y
DE := 0
S306
RETI
S308
OUT1 := 0
OUT2 := 0
S310
DEL_CNT := t_DEL
z.B. DEL_CNT := 5
S312
DEL_CNT := DEL_CNT - 1
z.B. 10 µs
S314
Y
DEL_CNT > 0
S316
N
HALL = 1?
S318
Y
N
OUT1 := HIGH
S320
OUT2 := HIGH
S322
KD := 1
S324
RETI
S326

Fig. 10

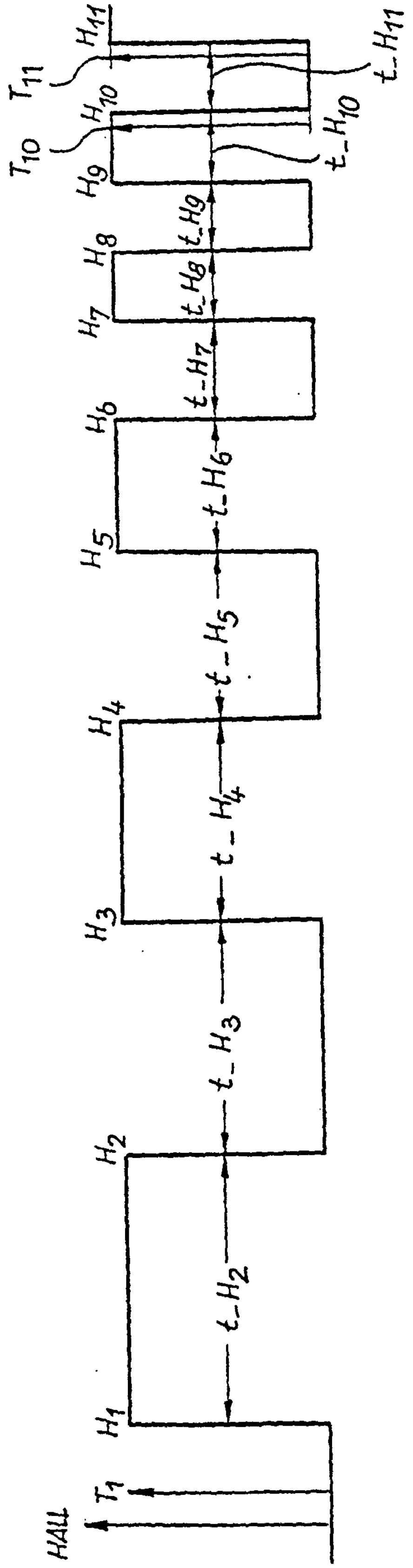
HALL
T1
H1
H2
H3
H4
H5
H6
H7
H8
H9
H10
H11
t_H2
t_H3
t_H4
t_H5
t_H6
t_H7
t_H8
t_H9
t_H10
t_H11
T10
T11

Fig. 11

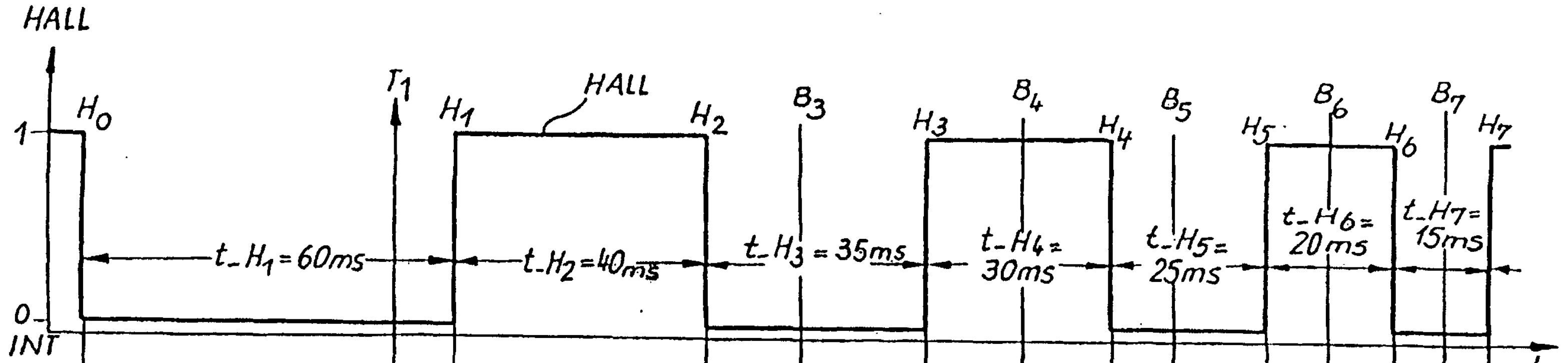


| | INT | H0 | T1 | H1 | H2 | B3 | H3 | B4 | H4 | B5 | H5 | B6 | H6 | B7 |
|---|---|---|---|---|---|---|---|---|---|---|---|---|---|---|
| DE | 0 | 1 | 0 | 1 | | | | | | | | | | |
| KD | 0 | | | | | 0 | | 0 | | 0 | | 0 | | 0 |
| SZW | 0 | | | | 1 | | 1 | | 1 | | 1 | | 1 | |
| t_AR | 50 | 50 | | 50 | 50 | | 39,8 | | 34,8 | | 29,8 | | 24,8 | |
| CNT_HL | 50 | 50 | 50 | 50 | 50 | | 39,8 | | 34,8 | | 29,8 | | 24,8 | |
| t_E | | | | 40 | 10 | | 15 | | 9,8 | | 9,8 | | 9,8 | |
| t_H | | | | | | 40 | | 35 | | 30 | | 25 | | 20 |
| t_TI | 50 | | | | | 39,8 | | 34,8 | | 29,8 | | 24,8 | | 19,8 |
| t_B | 50 | | | | | 50 | | 39,8 | | 34,8 | | 29,8 | | 24,8 |
| OUT 1 | 1 | 0 | | 1 | 0 | | 1 | | 0 | | 1 | | 0 | |
| OUT 2 | 0 | 1 | | 0 | 1 | | 0 | | 1 | | 0 | | 1 | |

Fig. 12A

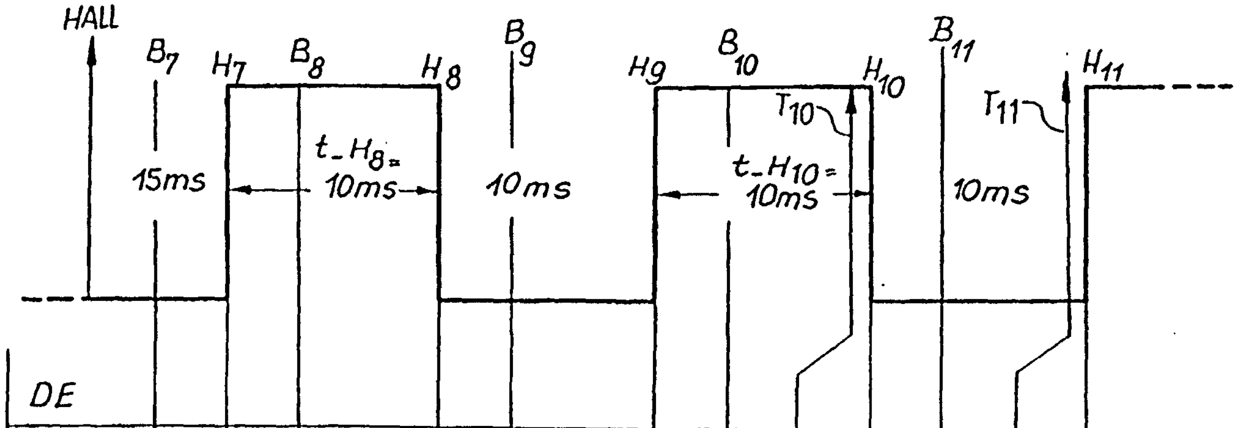


| | | | | | | | | | | | | |
|---|---|---|---|---|---|---|---|---|---|---|---|---|
| KD | 0 | | 0 | | 0 | | 0 | 1 | | 0 | 1 | |
| SZW | | 1 | | 1 | | 1 | | | 1 | | | 1 |
| t_AR | | 19,8 | | 14,8 | | 9,8 | | | 9,8 | | | 9,8 |
| CNT_HL | | 19,8 | | 14,8 | | 9,8 | | 9,8 | 9,8 | | 9,8 | 9,8 |
| t_E | | 9,8 | | 9,8 | | 4,8 | | | 9,6 | | | 9,6 |
| t_H | 20 | | 15 | | 10 | | 10 | | | 10 | | |
| t_TI | 19,8 | | 14,8 | | 9,8 | | 9,8 | | | 9,8 | | |
| t_B | 24,8 | | 19,8 | | 14,8 | | 9,8 | | | 9,8 | | |
| OUT 1 | | 1 | | 0 | | 1 | | 0 | | | 1 | |
| OUT 2 | | 0 | | 1 | | 0 | | 1 | | | 0 | |

Fig. 12 B

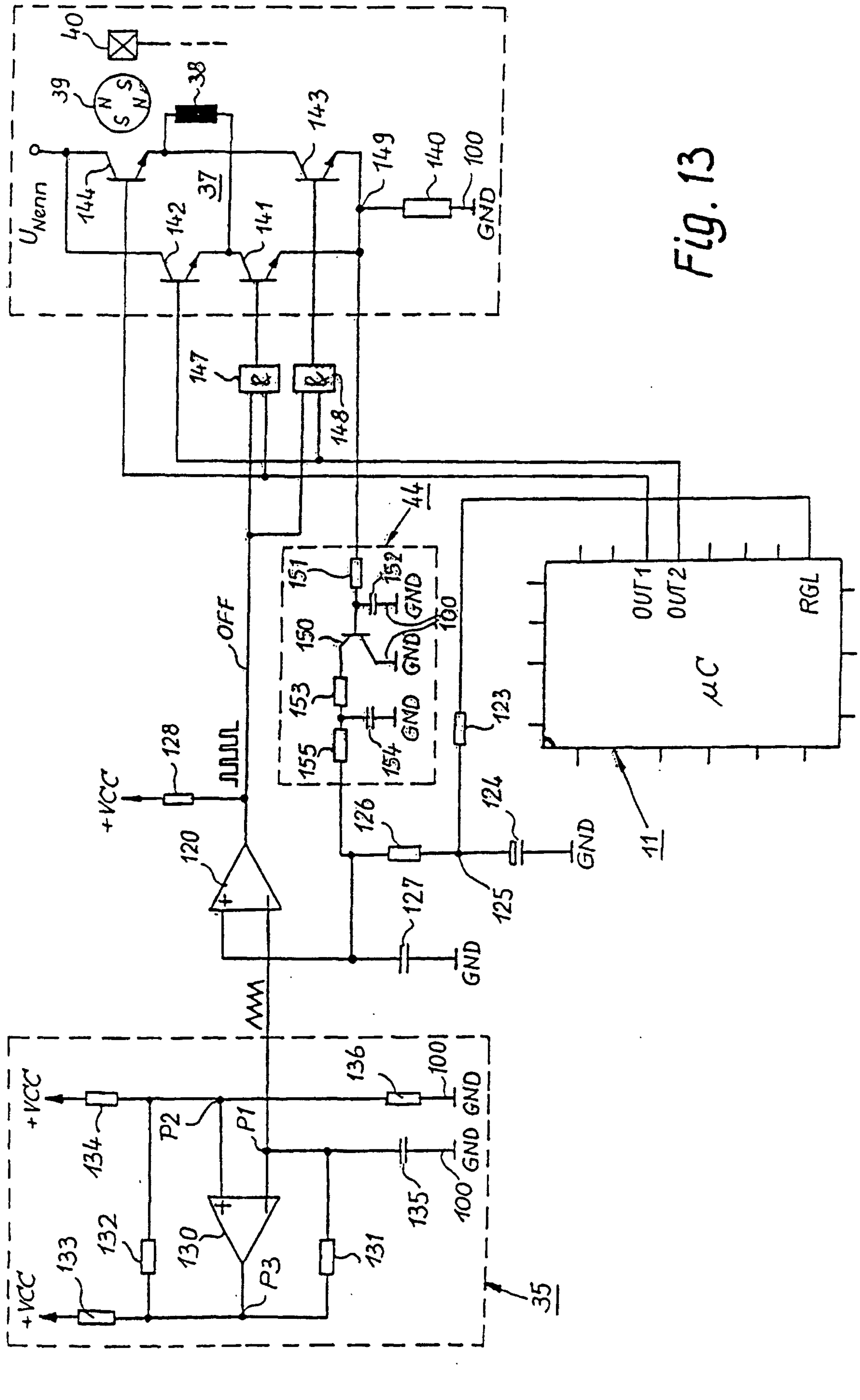

40
39
N
S
S
N
38
143
144
142
37
141
149
140
100
GND
$U_{Nenn}$
147
&
148
44
151
152
GND
100
150
GND
OFF
153
GND
155
154
128
+VCC
123
126
124
GND
120
127
GND
125
OUT1
OUT2
RGL
μC
11
136
100
GND
+VCC
P2
P1
GND
134
135
100
130
132
133
+VCC
P3
131
35


Fig. 13

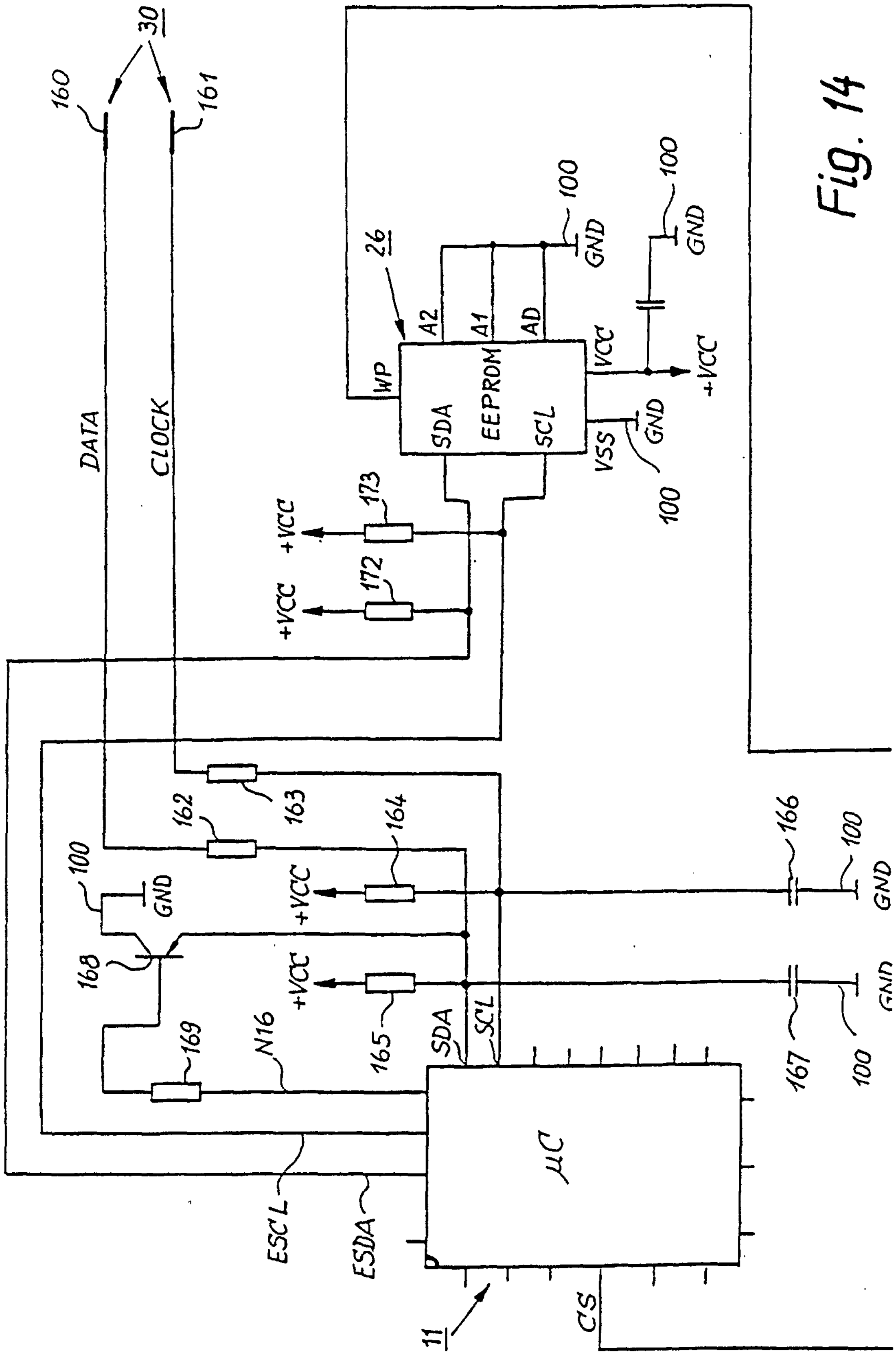
30
160
161
DATA
CLOCK
26
WP
A2
A1
AD
EEPROM
SDA
SCL
VCC
VSS
GND
100
+VCC
173
172
162
163
164
165
166
167
168
169
N16
SDA
SCL
μC
ESCL
ESDA
CS
11

Fig. 14

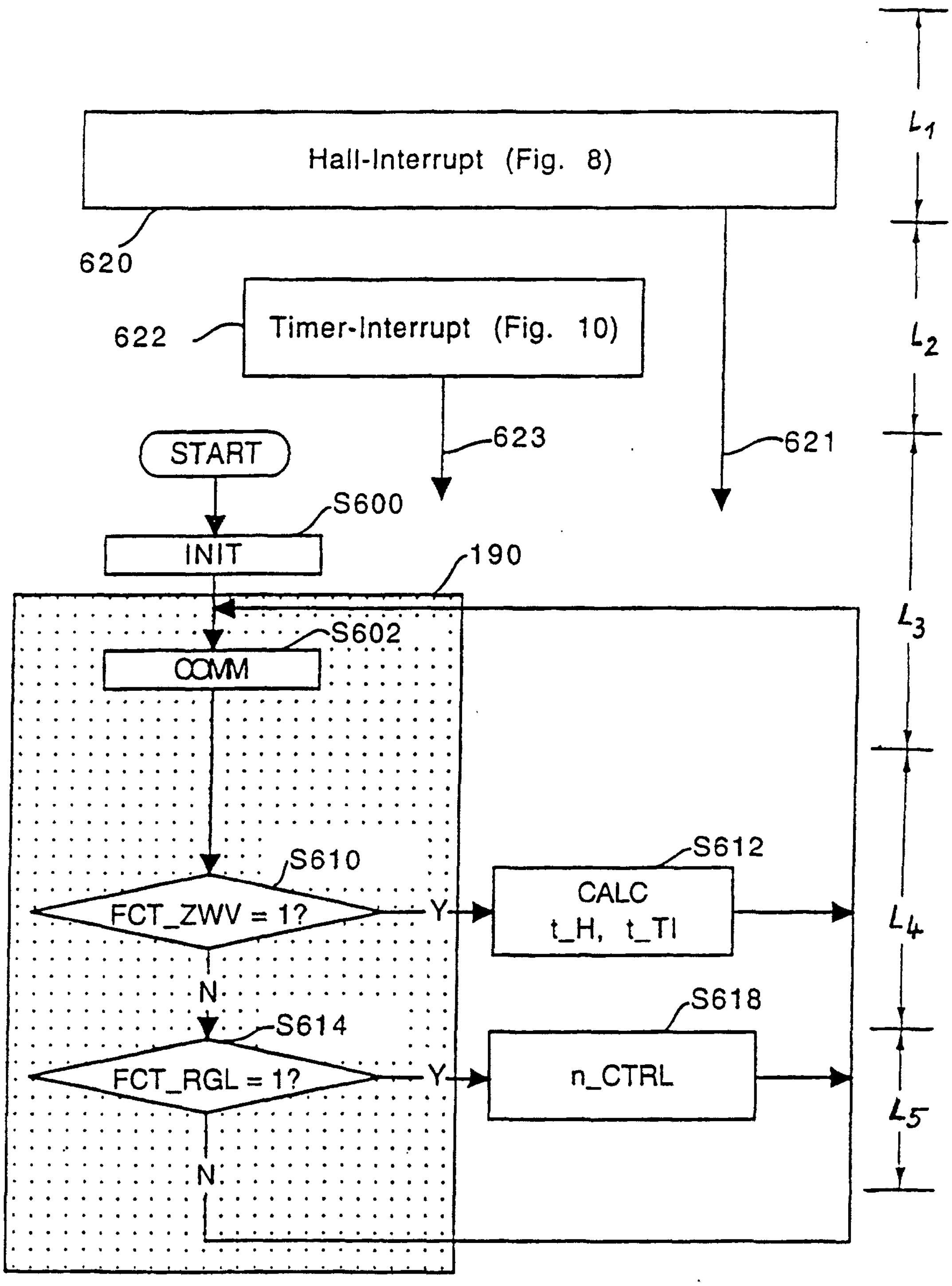
Hall-Interrupt (Fig. 8)
620
622
Timer-Interrupt (Fig. 10)
623
621
START
S600
INIT
190
S602
COMM
S610
FCT_ZWV = 1?
Y
N
S612
CALC
t_H, t_TI
S614
FCT_RGL = 1?
Y
N
S618
n_CTRL
L1
L2
L3
L4
L5

Fig. 15

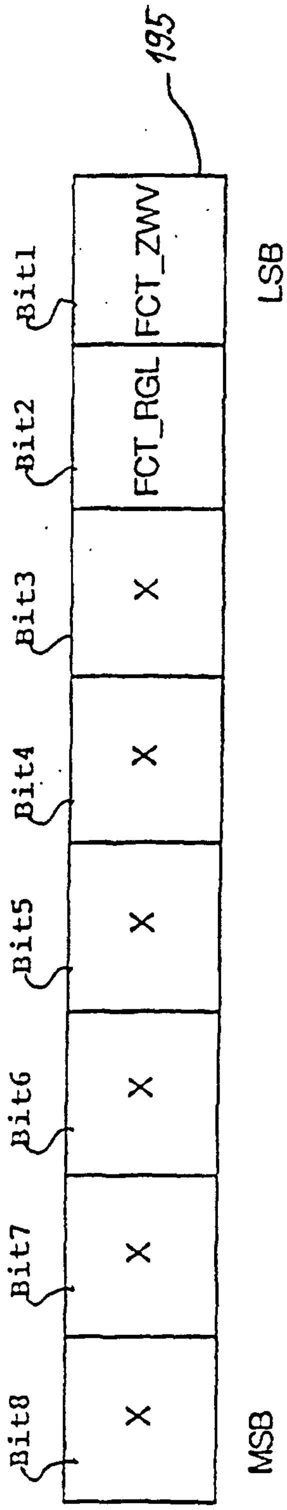
195
Bit1
Bit2
Bit3
Bit4
Bit5
Bit6
Bit7
Bit8
FCT_ZWV
FCT_RGL
X
X
X
X
X
X
LSB
MSB

Fig. 16

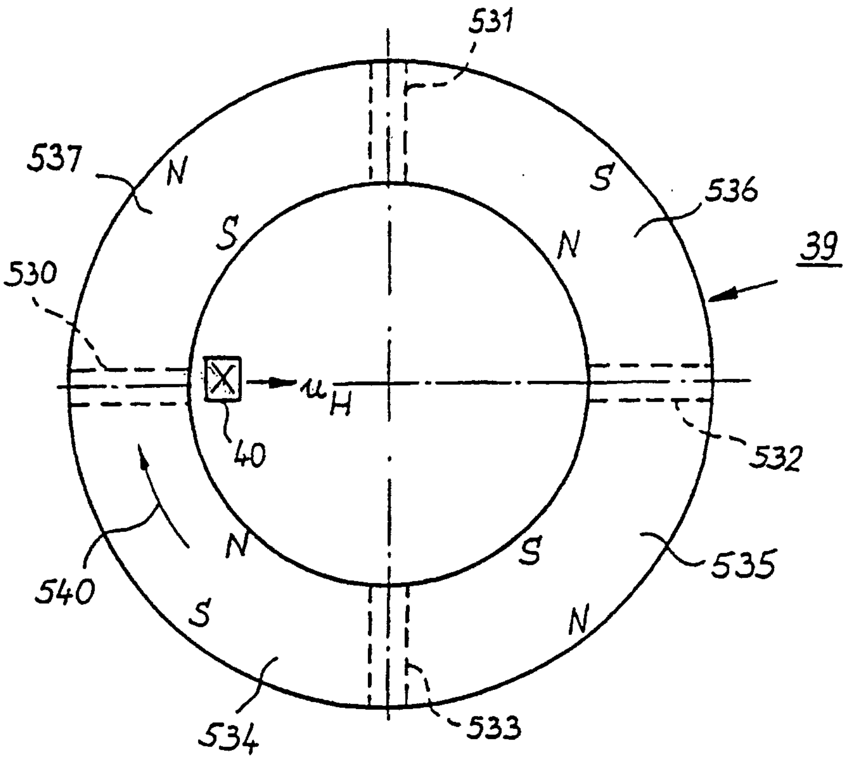


Fig. 17

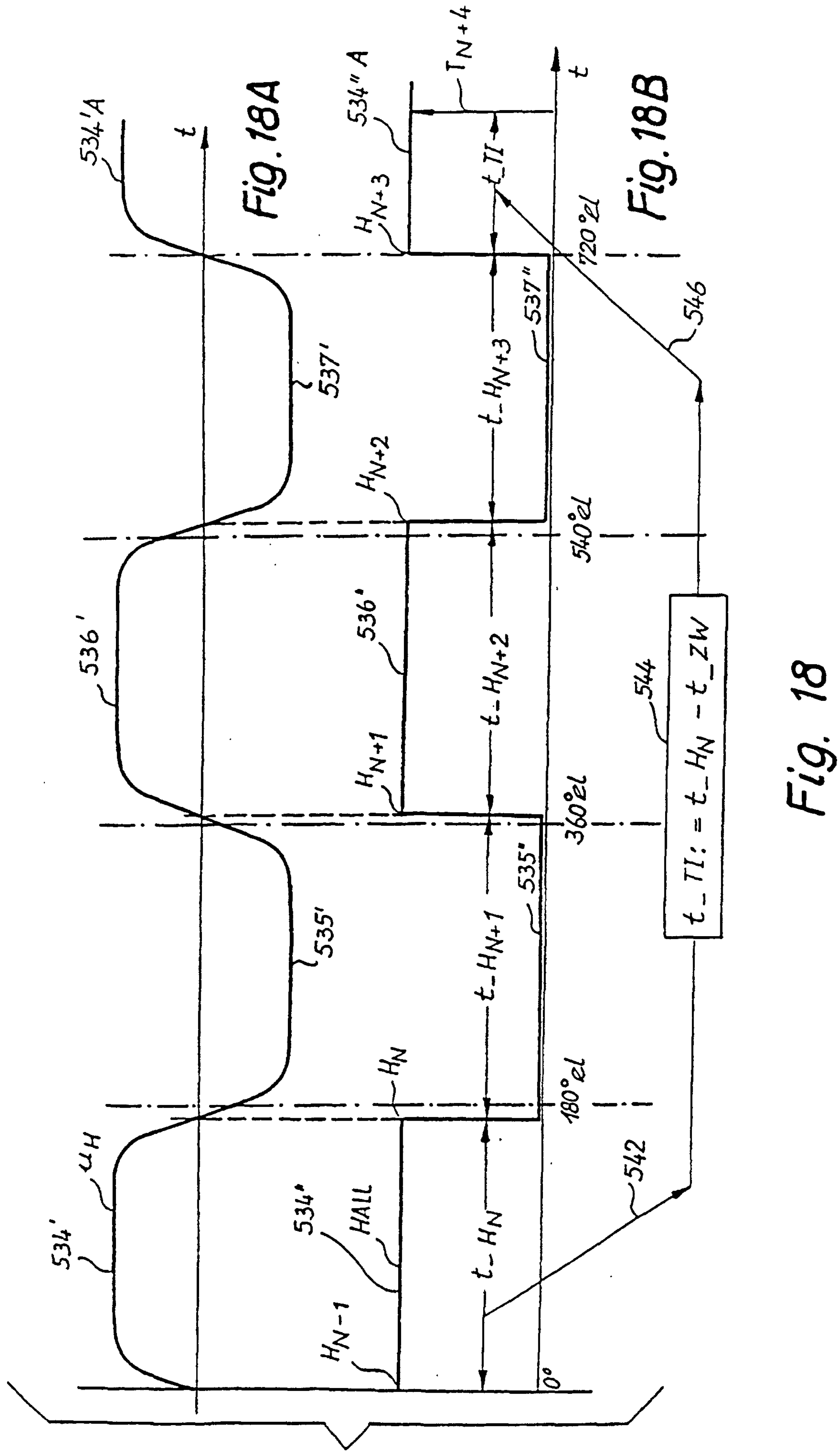
Fig. 18A
Fig. 18B
534'A
534''A
t
534'
534''
HALL
$u_H$
535'
535''
536'
536''
537'
537''
$H_{N-1}$
$H_N$
$H_{N+1}$
$H_{N+2}$
$H_{N+3}$
$T_{N+4}$
t_$H_N$
t_$H_{N+1}$
t_$H_{N+2}$
t_$H_{N+3}$
t_TI
0°
180°el
360°el
540°el
720°el
542
544
546
t_TI: = t_$H_N$ - t_ZW

Fig. 18

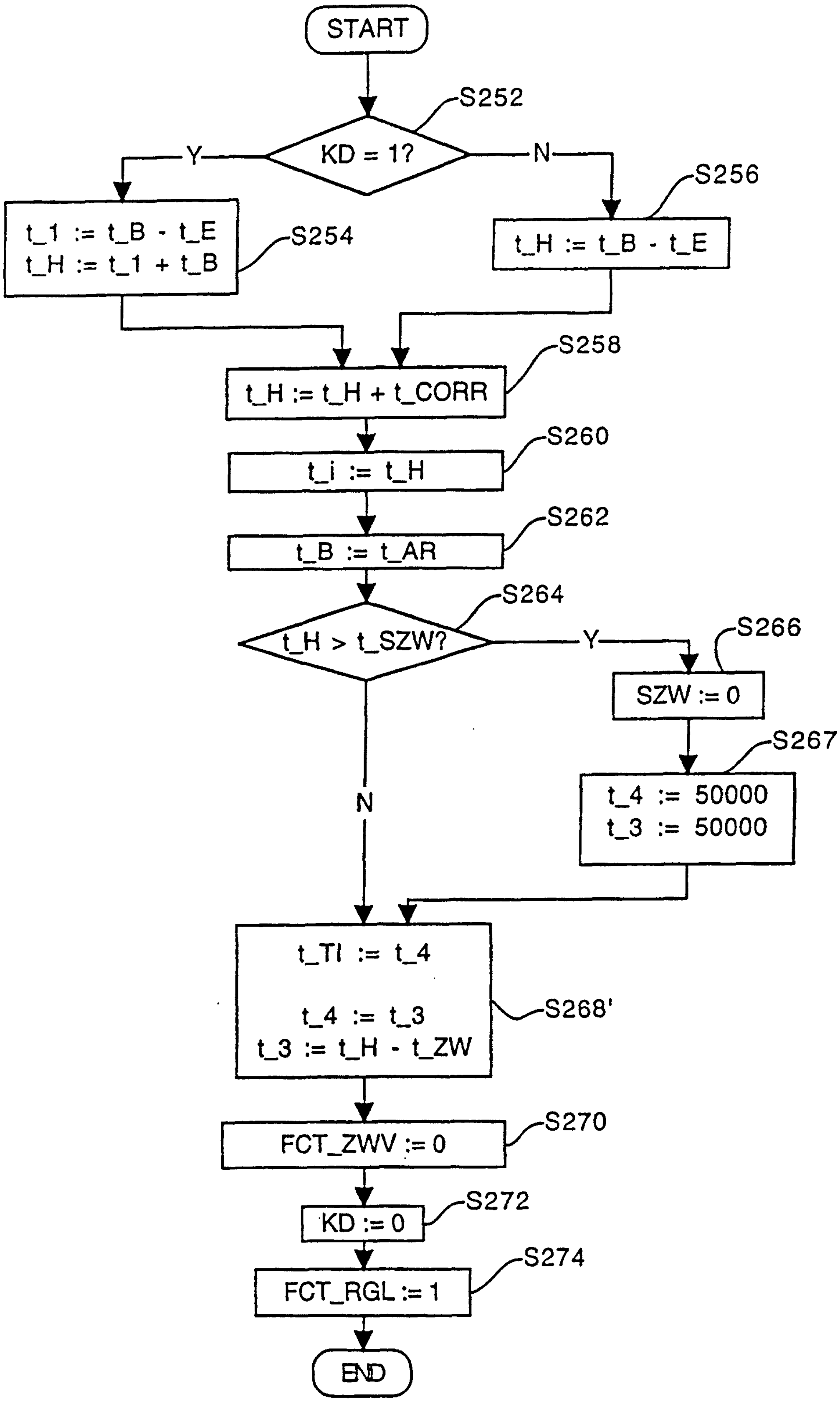
START
S252
KD = 1?
Y
N
t_1 := t_B - t_E
t_H := t_1 + t_B
S254
S256
t_H := t_B - t_E
S258
t_H := t_H + t_CORR
S260
t_i := t_H
S262
t_B := t_AR
S264
t_H > t_SZW?
Y
S266
SZW := 0
S267
t_4 := 50000
t_3 := 50000
N
t_TI := t_4
t_4 := t_3
t_3 := t_H - t_ZW
S268'
S270
FCT_ZWV := 0
S272
KD := 0
S274
FCT_RGL := 1
END

Fig. 19

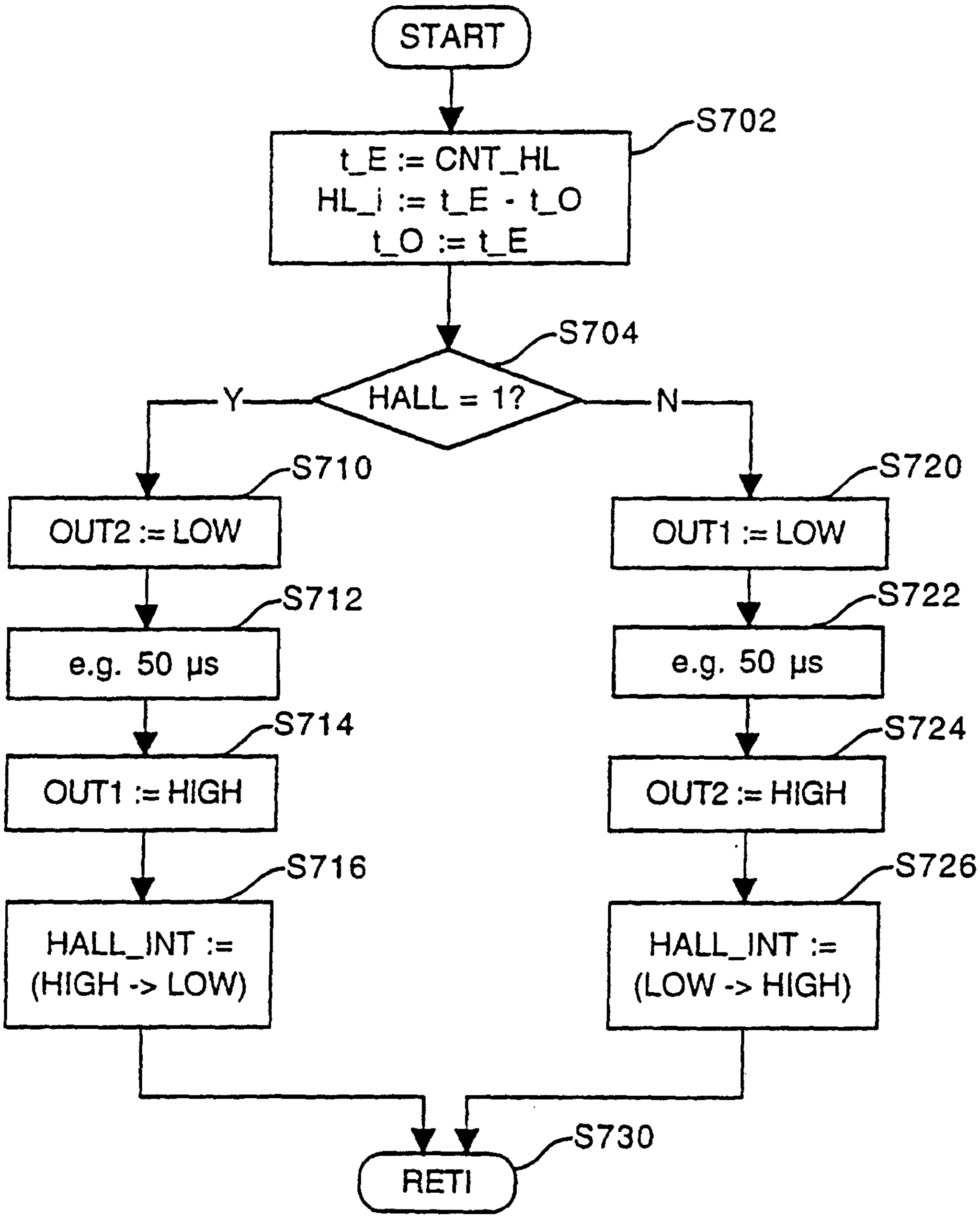
START
S702
t_E := CNT_HL
HL_i := t_E - t_O
t_O := t_E
S704
HALL = 1?
Y
N
S710
OUT2 := LOW
S712
e.g. 50 µs
S714
OUT1 := HIGH
S716
HALL_INT :=
(HIGH -> LOW)
S720
OUT1 := LOW
S722
e.g. 50 µs
S724
OUT2 := HIGH
S726
HALL_INT :=
(LOW -> HIGH)
S730
RETI

Fig. 20

Fig.21

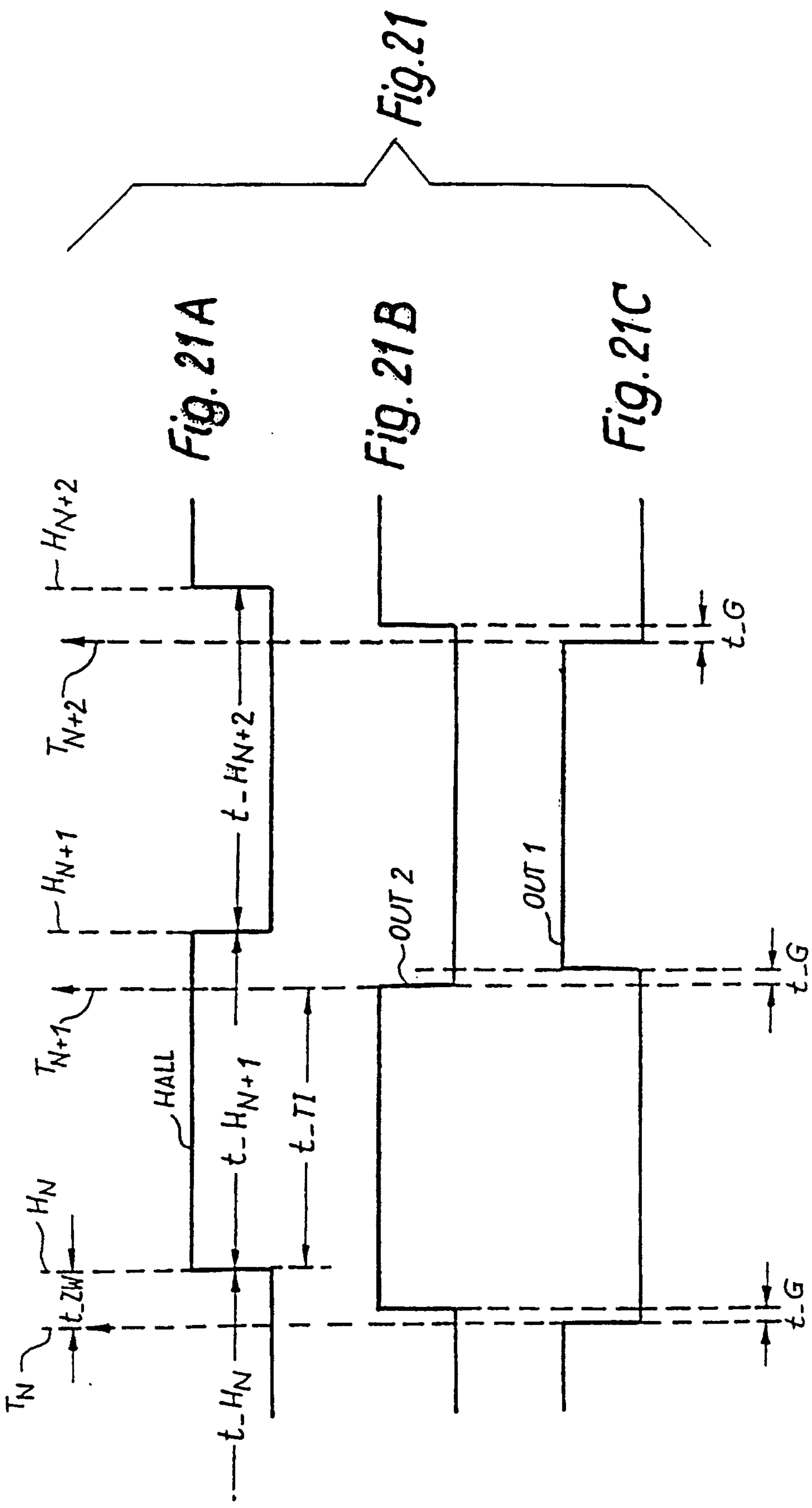


Fig. 21 A

Fig. 21 B

Fig. 21C

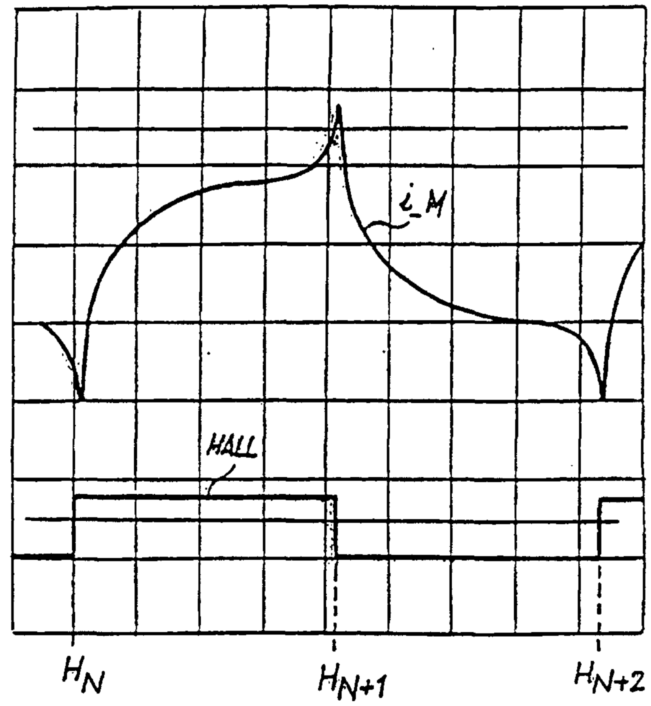


Fig. 22

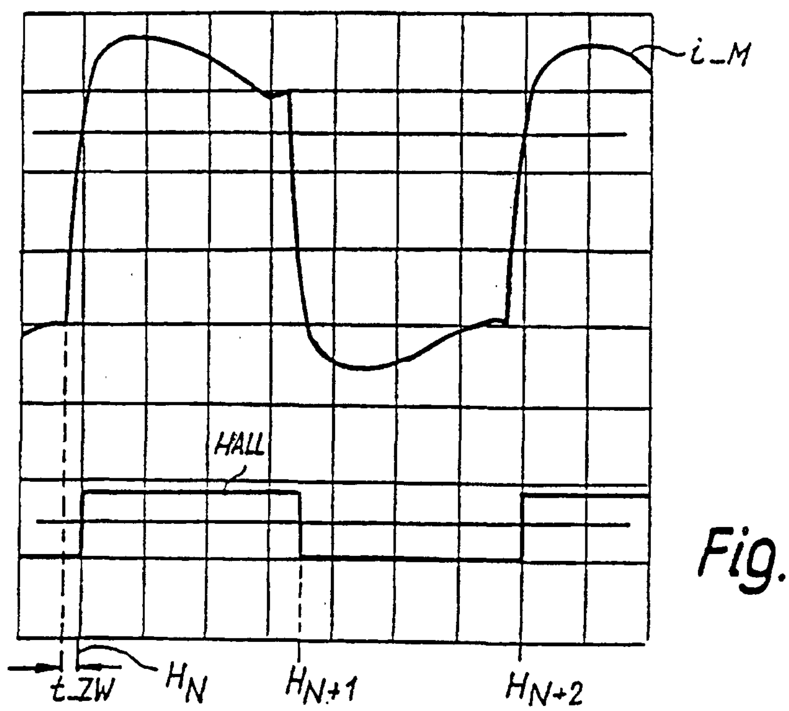


Fig. 23